# EUROPEAN PATENT SPECIFICATION

(11) **EP 3 063 430 B1**
(45) Date of publication and mention of the grant of the patent: **09.12.2026**
(21) Application number: 14793758.5
(22) Date of filing: 28.10.2014
(51) Int. Cl.: F16F 9/04

(54) **GAS SPRING AND GAS DAMPER ASSEMBLIES, SUSPENSION SYSTEMS AND METHODS**
GASFEDER- UND GASDÄMPFERANORDNUNGEN, AUFHÄNGUNGSSYSTEME UND VERFAHREN
ENSEMBLES RESSORT À GAZ ET ET AMORTISSEUR À GAZ, SYSTÈMES ET PROCÉDÉS DE SUSPENSION

(30) Priority: 28.10.2013 US 201361896547 P
(43) Date of publication of application: 07.09.2016
(73) Proprietor: Firestone Industrial Products Company, LLC, Nashville, TN 37201 (US)
(72) Inventor: MOULIK, Pradipta, N., Carmel, IN 46032 (US); LEONARD, Joshua, R., Noblesville, IN 46060 (US); BROOKES, Graham, R., Noblesville, IN 46062 (US)
(74) Representative: Kraus & Lederer PartGmbB
(86) International application number: PCT/US2014/062595
(87) International publication number: WO 2015/065989

(56) References cited:
- EP-A2- 0 166 702
- EP-A2- 0 166 702
- DE-A1- 102010 045 563
- DE-A1- 102010 045 563
- GB-A- 1 068 167
- GB-A- 1 068 167
- US-A- 4 506 910
- US-A1- 2004 032 065
- US-A1- 2004 032 065
- US-A1- 2008 284 072
- US-A1- 2008 284 072

## Description

### BACKGROUND

The subject matter of the present disclosure broadly relates to the art of gas spring devices and, more particularly, to gas spring and gas damper assemblies that are capable of providing pressurized gas damping through the use of one or more elongated gas damping passages. In some cases, such pressurized gas damping can be tuned to provide pressurized gas damping within two or more frequency ranges. Suspension systems including one or more of such gas spring and gas damper assemblies as well as methods of manufacture are also included.

The subject matter of the present disclosure may find particular application and use in conjunction with components for wheeled vehicles, and will be shown and described herein with reference thereto. However, it is to be appreciated that the subject matter of the present disclosure is also amenable to use in other applications and environments, and that the specific uses shown and described herein are merely exemplary. For example, the subject matter of the present disclosure could be used in connection with gas spring and gas damper assemblies of non-wheeled vehicles, support structures, height adjusting systems and actuators associated with industrial machinery, components thereof and/or other such equipment. Accordingly, the subject matter of the present disclosure is not intended to be limited to use associated with suspension systems of wheeled vehicles.

Wheeled motor vehicles of most types and kinds include a sprung mass, such as a body or chassis, for example, and an unsprung mass, such as two or more axles or other wheel-engaging members, for example, with a suspension system disposed therebetween. Typically, a suspension system will include a plurality of spring devices as well as a plurality of damping devices that together permit the sprung and unsprung masses of the vehicle to move in a somewhat controlled manner relative to one another. Generally, the plurality of spring elements function to accommodate forces and loads associated with the operation and use of the vehicle, and the plurality of damping devices are operative to dissipate undesired inputs and movements of the vehicle, particularly during dynamic operation thereof. Movement of the sprung and unsprung masses toward one another is normally referred to in the art as jounce motion while movement of the sprung and unsprung masses away from one another is commonly referred to in the art as rebound motion.

In many applications involving vehicle suspension systems, it may be desirable to utilize spring elements that have as low of a spring rate as is practical, as the use of lower spring rate elements can provide improved ride quality and comfort compared to spring elements having higher spring rates. That is, it is well understood in the art that the use of spring elements having higher spring rates (i.e., stiffer springs) will transmit a greater magnitude of road inputs into the sprung mass of the vehicle and that this typically results in a rougher, less-comfortable ride. Whereas, the use of spring elements having lower spring rates (i.e., softer, more-compliant springs) will transmit a lesser amount of road inputs into the sprung mass and will, thus, provide a more comfortable ride.

Generally, it is possible to reduce the spring rate of gas springs, thereby improving ride comfort, by increasing the volume of pressurized gas operatively associated with the gas spring. This is commonly done by placing an additional chamber, cavity or volume filled with pressurized gas into fluid communication with the primary spring chamber of the gas spring.

Additionally, the one or more damping elements can, in some cases, be of a type and kind that utilize gaseous fluid rather than liquid as the working medium. In known constructions, the pressurized gas damping element can permit gas flow between two or more volumes of pressurized gas, such as through one or more orifices or through one or more valve ports. Generally, there is some resistance to the movement of pressurized gas through these passages or ports. This resistance acts to dissipate energy associated with gas springs and/or suspension systems, and thereby provide some measure of damping.

However, various disadvantages exist with known gas spring constructions that include additional gas volumes to assist in reducing the spring rate of the gas spring, and at least some of these disadvantages involve the movement of air between the two volumes. That is, the flow of pressurized gas between the two volumes is at least partially dependent upon the size, length, shape and number of fluid pathways connecting the two volumes. It will be appreciated that one or more, very large, fluid-communication pathways would permit increased quantities of pressurized gas to flow between the two volumes. However, such pathways would provide reduced resistance to gas flow and, thus, provide minimal or at least decreased damping characteristics. What's more, such very large pathways are often difficult to provide, given the limited operating and mounting envelopes normally associated with vehicle suspension systems.

Increased damping performance can, in some cases, be achieved by reducing the size, increasing the length, altering the shape and/or reducing the number of fluid pathways between the two volumes. Such alterations would, however, normally provide increased damping performance at the expense of other performance characteristics of the gas spring and gas damper assemblies. That is, the changes that increase the resistance to flow through the passages and, thus, increase damping performance will typically also decrease the effectiveness of the additional gas volume in reducing the spring rate of the gas spring.

Notwithstanding the overall success of known constructions, certain disadvantages may still exist that could be limiting to broader adoption and/or use of gas spring devices. Accordingly, it is believed desirable to develop gas spring devices that overcome the foregoing and/or other problems and/or disadvantages of known designs, and/or otherwise advance the art of gas spring devices. GB1068167A discloses a gas spring and gas damper assembly in accordance of the preamble of claim 1.

### BRIEF DESCRIPTION

One example of a gas spring and gas damper assembly in accordance with the subject matter of the present disclosure includes a first end member and a second end member. A flexible spring member is secured between the first and second end members such that a spring chamber is at least partially defined by the flexible spring member between the first and second end members. The assembly includes a first damper reservoir having a substantially fixed volume, and an elongated gas damping passage extending in fluid communication between the spring chamber and the first damper reservoir. The elongated gas damping passage is dimensioned to generate pressurized gas damping of vibrations across a first range of frequencies. In some cases, the elongated gas damping passage can take the form of a length of conduit having a generally tubular form. In some cases, the length of conduit can be configured to include one or more helical loops or coils. In some cases, the elongated passage can have an approximately circular cross-sectional shape, an approximately elliptical cross-sectional shape and/or approximately ovoid cross-sectional shape along at least a portion of the length thereof.

Additionally, a gas spring and gas damper assembly in accordance with the subject matter of the present disclosure can include a first flow control system that is fluidically connected between the spring chamber and the first damper reservoir. The first flow control system can be operative to selectively permit pressurized gas flow between the spring chamber and the first damper reservoir. The first flow control system can be cooperative with the first damper reservoir to generate pressurized gas damping of vibrations across a second range of frequencies that is different from the first range of frequencies associated with the elongated gas damping passage.

Furthermore, or in the alternative, a gas spring and gas damper assembly in accordance with the subject matter of the present disclosure can include a second damper reservoir having a substantially fixed volume. In such case, the first flow control system or a second flow control system can be fluidically connected between the spring chamber and the second damper reservoir. In such case, the first or second flow control system can be operative to selectively permit pressurized gas flow between the spring chamber and the second damper reservoir, and can be cooperative with the second damper reservoir to generate pressurized gas damping of vibrations across the second range of frequencies or a third range of frequencies, which is different from the first and second ranges of frequencies.

One example of a suspension system in accordance with the subject matter of the present disclosure can include a pressurized gas system, and at least one gas spring and gas damper assembly according to any one of the foregoing three paragraphs with at least the spring chamber thereof in fluid communication with the pressurized gas system.

One example of a method of manufacturing a gas spring and gas damper assembly in accordance with the subject matter of the present disclosure can include providing a flexible wall and forming a spring chamber from at least a portion of the flexible wall. The method can also include providing a first damper reservoir having a substantially fixed volume. The method can further include providing an elongated gas damping passage dimensioned to generate pressurized gas damping of vibrations across a first range of frequencies. The method can also include operatively connecting the elongated gas damping passage in fluid communication between the spring chamber and the first damper reservoir.

In some cases, the method can further include providing a flow control system and connecting the flow control system in fluid communication between the spring chamber and the first damper reservoir or a second damper reservoir. The flow control system being operative to selectively permit pressurized gas flow between the spring chamber and the damper reservoir, and cooperative with the damper reservoir to generate pressurized gas damping of vibrations across a second range of frequencies that is different from the first range of frequencies.

### BRIEF DESCRIPTION OF THE DRAWINGS

FIG. 1 is a schematic representation of one example of a suspension system of an associated vehicle that includes one or more gas spring and gas damper assemblies in accordance with the subject matter of the present disclosure.
FIG. 2 is a side view of one example of a gas spring and gas damper assembly in accordance with the subject matter of the present disclosure.
FIG. 3 is a cross-sectional side view of the gas spring and gas damper assembly in FIG. 2 taken from along line 3-3 therein.
FIG. 4 is a cross-sectional side view of one example of a control device suitable for use in fluid communication along an elongated gas damping passage in accordance with the subject matter of the present disclosure.
FIG. 5 is a cross-sectional side view of another example of a control device suitable for use in fluid communication along an elongated gas damping passage in accordance with the subject matter of the present disclosure.
FIG. 6 is a cross-sectional side view of a further example of a control device suitable for use in fluid communication along an elongated gas damping passage in accordance with the subject matter of the present disclosure.
FIG. 7 is a side view of another example of a gas spring and gas damper assembly in accordance with the subject matter of the present disclosure.
FIG. 8 is a cross-sectional side view of the gas spring and gas damper assembly in FIG. 7 taken from along line 8-8 therein.
FIG. 9 is a bottom perspective view of the end member in FIGS. 7 and 8 including an internal elongated gas damping passage.
FIG. 10 is a side view of a further example of a gas spring and gas damper assembly in accordance with the subject matter of the present disclosure shown prior to assembly on an associated structural component.
FIG. 11 is a side view of the gas spring and gas damper assembly shown in FIG. 10.
FIG. 12 is a cross-sectional side view of the gas spring and gas damper assembly in FIGS. 10 and 11 taken from along line 12-12 in FIG. 11.
FIG. 13 is a top perspective view of an alternate construction of the gas spring and gas damper assembly in FIGS. 10-12.
FIG. 14 is a cross-sectional side view of the gas spring and gas damper assembly in FIG. 13 taken from along a line similar to line 12-12 in FIG. 11.
FIG. 15 is a graphical representation of one example of stiffness versus frequency illustrating behavior of a gas spring and gas damper assembly that includes an elongated gas damping passage in accordance with the subject matter of the present disclosure.
FIG. 16 is a graphical representation of another example of stiffness versus frequency illustrating behavior of a gas spring and gas damper assembly that includes two elongated gas damping passages in accordance with the subject matter of the present disclosure tuned to provide pressurized gas damping at two different target frequencies.

### DETAILED DESCRIPTION

Turning now to the drawings, it is to be understood that the showings are for purposes of illustrating examples of the subject matter of the present disclosure and are not intended to be limiting. Additionally, it will be appreciated that the drawings are not to scale and that portions of certain features and/or elements may be exaggerated for purpose of clarity and ease of understanding.

A gas spring and gas damper assembly in accordance with the subject matter of the present disclosure includes at least one end member and a flexible wall secured to the end member that at least partially defines a spring chamber having a pressurized gas volume that can vary during certain conditions of use. Such a gas spring and gas damper assembly includes at least one additional pressurized gas reservoir that is internal to the gas spring and gas damper assembly but separate or otherwise fluidically dissociated from the spring chamber. The additional pressurized gas reservoir can have a pressurized gas volume that is substantially fixed in comparison with the pressurized gas volume of the spring chamber. A gas spring and gas damper assembly in accordance with the subject matter of the present disclosure includes an elongated gas damping passage in fluid communication between the spring chamber and the additional pressurized gas reservoir. The elongated gas damping passage is tuned or otherwise operative to generate pressurized gas damping of vibrations at a targeted frequency or across a targeted range of frequencies.

Additionally, in some cases, a gas spring and gas damper assembly in accordance with the subject matter of the present disclosure can include a control device disposed in fluid communication between the spring chamber and the additional pressurized gas reservoir. In some cases, the control device can be disposed in fluid communication along the elongated gas damping passage (i.e., in series with the elongated damping passage). Additionally, or in the alternative, the control device can be disposed in fluid communication between the spring chamber and the additional pressurized gas reservoir separately from the elongated gas damping passage (i.e., in parallel with the elongated damping passage). In either of such cases, the control device can be tuned or otherwise operative to generate pressurized gas damping of vibrations across another, different targeted frequency or range of frequencies than that associate with the elongated gas damping passage alone.

Furthermore, in some cases, at least two additional pressurized gas reservoirs can be used that are internal to the gas spring and gas damper assembly and also separate from or otherwise fluidically dissociated from the spring chamber and from one another. In such cases, the elongated gas damping passage can be a first elongated gas damping passage that is disposed in fluid communication between the spring chamber and one of the at least two pressurized gas reservoirs. And, an additional elongated gas damping passage and/or one or more control devices can, optionally, be disposed in fluid communication between the spring chamber and another one of the at least two pressurized gas reservoirs. In such cases, the additional elongated gas damping passage and/or one or more control devices can be tuned or otherwise operative to generate pressurized gas damping of vibrations across another, different targeted frequency or range of frequencies than that associated with the first elongated gas damping passage alone.

Further still, in some cases, a gas spring and gas damper assembly in accordance with the subject matter of the present disclosure can include two or more additional pressurized gas reservoirs that are internal to the gas spring and gas damper assembly and also separate from or otherwise fluidically dissociated from the spring chamber and from one another. A gas spring and gas damper assembly in accordance with the subject matter of the present disclosure can also include an elongated gas damping passage in fluid communication between the spring chamber and one of the two or more additional pressurized gas reservoirs. Additionally, a plurality of control devices can, optionally, be provided with at least one control device fluidically associated with each of the two or more pressurized gas reservoirs. One or more of the plurality of control devices can be adapted to selectively permit pressurized gas flow between the spring chamber and a corresponding one of the pressurized gas volumes. In some cases, a combination of a control device and a corresponding one pressurized gas volume can be tuned to generate pressurized gas damping of vibrations at a target frequency or across a targeted frequency range. In a preferred arrangement, the targeted frequency or range of frequencies can be different from one another and different from the targeted frequency or range of frequencies of the elongated gas damping passage.

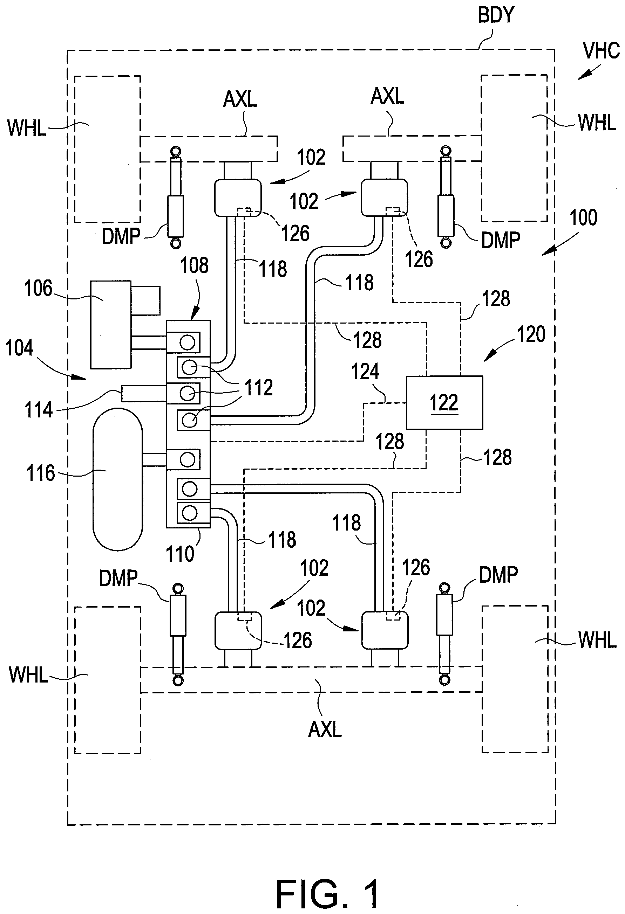

In some cases, a suspension system can include one or more gas spring and gas damper assemblies in accordance with the subject matter of the present disclosure. FIG. 1 illustrates one example of a suspension system **100** disposed between a sprung mass, such as an associated vehicle body **BDY,** for example, and an unsprung mass, such as an associated wheel **WHL** or an associated axle **AXL,** for example, of an associated vehicle **VHC.** It will be appreciated that any one or more of the components of the suspension system can be operatively connected between the sprung and unsprung masses of the associated vehicle in any suitable manner.

The suspension system can also include a plurality of gas spring and gas damper assemblies supported between the sprung and unsprung masses of the associated vehicle. In the arrangement shown in FIG. 1, suspension system **100** includes four gas spring and gas damper assemblies **102,** one of which is disposed toward each corner of the associated vehicle adjacent a corresponding wheel **WHL.** However, it will be appreciated that any other suitable number of gas spring and gas damper assemblies could alternately be used in any other configuration and/or arrangement. As shown in FIG. 1, gas spring and gas damper assemblies **102** are supported between axles **AXL** and body **BDY** of associated vehicle **VHC.** Additionally, it will be recognized that the gas spring and gas damper assemblies shown and described in FIG. 1 (e.g., gas spring and gas damper assemblies **102)** are illustrated as being of a rolling lobe-type construction. It is to be understood, however, that gas spring and gas damper assemblies of other types, kinds and/or constructions could alternately be used.

Depending on desired performance characteristics and/or other factors, the suspension system may, in some cases, also include damping members, such as dampers **DMP,** for example, of a typical construction that are provided separately from gas spring and gas damper assemblies **102** and secured between the sprung and unsprung masses in a conventional manner. In a preferred arrangement, however, gas spring and gas damper assemblies **102** can be sized, configured and operative to provide the desired performance characteristics for the suspension system without the use of additional damping members (e.g., conventional struts or shock absorbers) that are separately provided.

Suspension system **100** also includes a pressurized gas system **104** operatively associated with the gas spring and gas damper assemblies for selectively supplying pressurized gas (e.g., air) thereto and selectively transferring pressurized gas therefrom. In the exemplary embodiment shown in FIG. 1, pressurized gas system **104** includes a pressurized gas source, such as a compressor **106,** for example, for generating pressurized air or other gases. A control device, such as a valve assembly **108,** for example, is shown as being in communication with compressor **106** and can be of any suitable configuration or arrangement. In the exemplary embodiment shown, valve assembly **108** includes a valve block **110** with a plurality of valves **112** supported thereon. Valve assembly **108** can also, optionally, include a suitable exhaust, such as a muffler **114,** for example, for venting pressurized gas from the system. Optionally, pressurized gas system **104** can also include a reservoir **116** in fluid communication with the compressor and/or valve assembly **108** and suitable for storing pressurized gas.

Valve assembly **108** is in communication with gas spring and gas damper assemblies **102** through suitable gas transfer lines **118.** As such, pressurized gas can be selectively transferred into and/or out of the gas spring and gas damper assemblies through valve assembly **108** by selectively operating valves **112,** such as to alter or maintain vehicle height at one or more corners of the vehicle, for example.

Suspension system **100** can also include a control system **120** that is capable of communication with any one or more systems and/or components (not shown) of vehicle **VHC** and/or suspension system **100,** such as for selective operation and/or control thereof. Control system **120** can include a controller or electronic control unit (ECU) **122** communicatively coupled with compressor **106** and/or valve assembly **108,** such as through a conductor or lead **124,** for example, for selective operation and control thereof, which can include supplying and exhausting pressurized gas to and/or from gas spring and gas damper assemblies **102.** Controller **122** can be of any suitable type, kind and/or configuration.

Control system **120** can also, optionally, include one or more height (or distance) sensing devices **126,** such as, for example, may be operatively associated with the gas spring and gas damper assemblies and capable of outputting or otherwise generating data, signals and/or other communications having a relation to a height of the gas spring and gas damper assemblies or a distance between other components of the vehicle. Height sensing devices **126** can be in communication with ECU **122,** which can receive the height or distance signals therefrom. The height sensing devices can be in communication with ECU **122** in any suitable manner, such as through conductors or leads **128,** for example. Additionally, it will be appreciated that the height sensing devices can be of any suitable type, kind and/or construction.

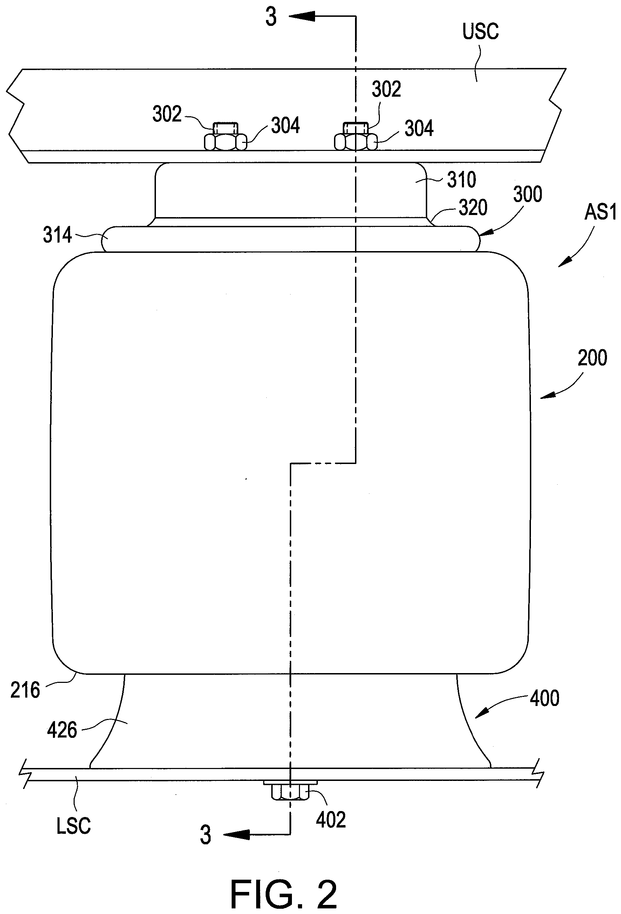

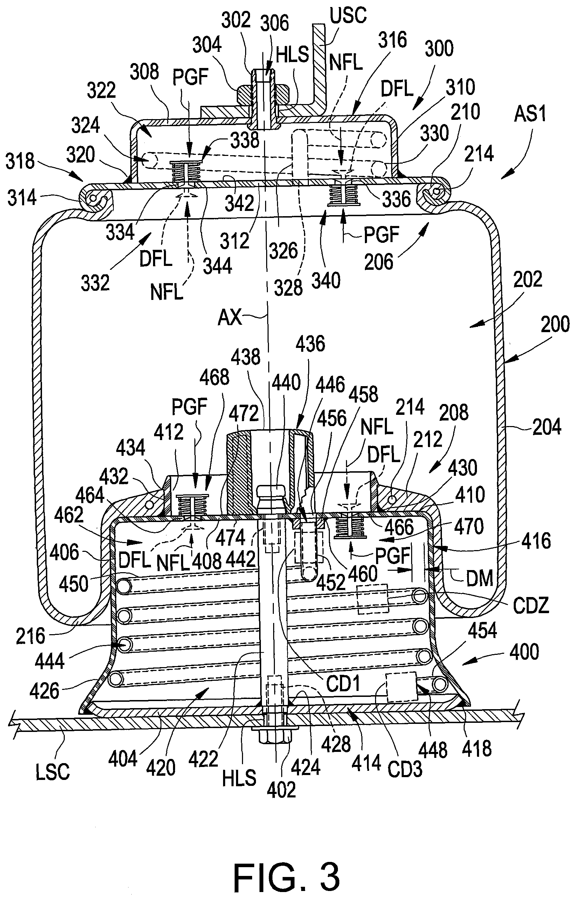

One example of a gas spring and gas damper assembly **AS1** is not corresponding to the literal wording of the claims and is provided for understanding of the invention, such as may be suitable for use as gas spring and gas damper assemblies **102,** for example, is shown in FIGS. 2 and 3. Gas spring and gas damper assembly **AS1** is shown as having a longitudinally-extending axis **AX** (FIG. 3) and can include a flexible spring member **200** that can extend peripherally around axis **AX.** Assembly **AS1** can also include any combination of one or more end members, such as one or more of an end member **300** and/or an end member **400.** Flexible spring member **200** can be secured between the one or more end members in a substantially fluid-tight manner such that a spring chamber **202** (FIG. 3) is at least partially defined therebetween.

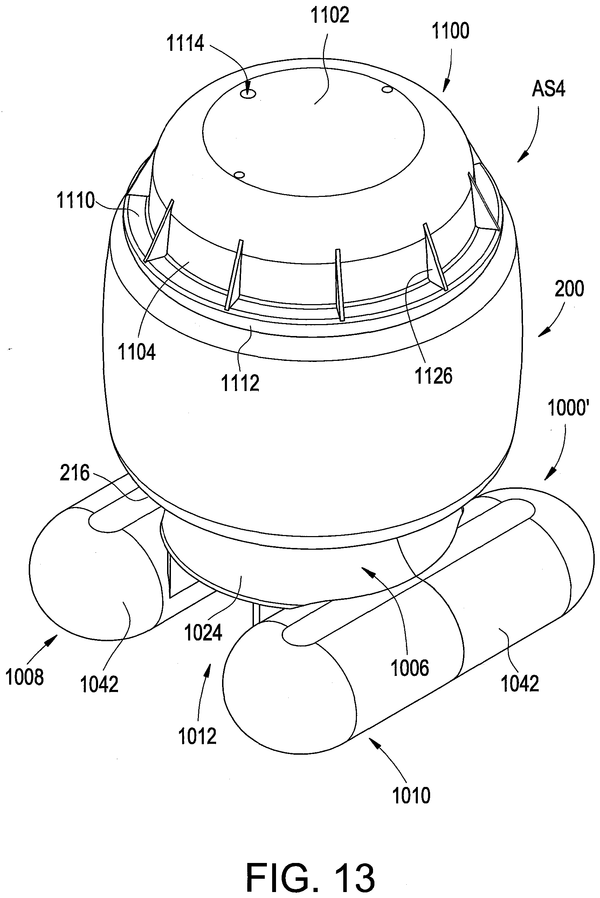

Gas spring and gas damper assembly **AS1** can be disposed between associated sprung and unsprung masses of an associated vehicle in any suitable manner. For example, one end member can be operatively connected to the associated sprung mass with the other end member disposed toward and operatively connected to the associated unsprung mass. As shown in FIGS. 2 and 3, for example, end member **300** can be secured on or along a first or upper structural component **USC,** such as associated vehicle body **BDY** in FIG. 1, for example, and can be secured thereon in any suitable manner. For example, one or more securement devices, such as mounting studs **302,** for example, can be included along end member **300.** In some
cases, the one or more securement devices (e.g., mounting studs **302)** can project outwardly from end member **300** and can be secured thereon in a suitable manner, such as, for example, by way of a flowed-material joint (not shown) or a press-fit connection (not identified). Additionally, such one or more securement devices can extend through mounting holes **HLS** in upper structural component **USC** and can receive one or more threaded nuts **304** or other securement devices, for example. As an alternative to one or more of mounting studs **302,** one or more threaded passages (e.g., blind passages and/or through passages) could be used in conjunction with a corresponding number of one or more threaded fasteners, such as are illustrated in FIG. 13, for example.

Additionally, one or more fluid communication ports, such as transfer passages **306,** for example, can, optionally, be provided to permit fluid communication with spring chamber **202,** such as may be used for transferring pressurized gas into and/or out of the spring chamber, for example. In the exemplary embodiment shown, transfer passages **306** extend through at least one of mounting studs **302** and are in fluid communication with spring chamber **202.** It will be appreciated, however, that any other suitable fluid communication arrangement could alternately be used.

End member assembly **400** can be secured on or along a second or lower structural component **LSC,** such as an axle **AXL** in FIG. 1, for example, in any suitable manner. As one example, lower structural component **LSC** could include one or more mounting holes **HLS** extending therethrough. In such case, a threaded fastener **402** could extend through one of mounting holes **HLS** and threadably engage end member **400** or another component of the assembly to secure the end member on or along the lower structural component.

Flexible spring member **200** can be of any suitable size, shape, construction and/or configuration. As one example, flexible spring member **200** can include a flexible wall **204** that is at least partially formed from one or more layers or plies of elastomeric material (e.g., natural rubber, synthetic rubber and/or thermoplastic elastomer) and can optionally include one or more plies or layers of filament reinforcing material (not shown). Flexible wall **204** is shown extending in a longitudinal direction between opposing ends **206** and **208.** In some cases, flexible spring member **200** can, optionally, include a mounting bead disposed along either one or both of ends **206** and **208** of the flexible wall. In the arrangement shown in FIGS. 2 and 3, for example, mounting beads **210** and **212** are shown as being respectively disposed along ends **206** and **208.** In some cases, the mounting beads can, optionally, include a reinforcing element, such as an endless, annular bead wire **214,** for example.

As indicated above, a gas spring and gas damper assembly in accordance with the subject matter of the present disclosure can include or be otherwise associated with at least one additional volume, reservoir and/or other chamber that is dissociated or otherwise fluidically distinguishable from the spring chamber. It will be appreciated that any combination of one or more volumes, reservoirs and/or other chambers that are internal and/or external to the gas spring and gas damper assembly can be used. For example, in some cases, one or more end members of the gas spring and gas damper assembly can at least partially define the spring chamber and can also at least partially define an additional volume, reservoir or chamber that is internal to the gas spring and gas damper assembly. It will be appreciated, however, that such one or more end members can be of any suitable type, kind, configuration and/or construction.

As one example, end member **300** is shown as being of a type that may, in some cases, be referred to as a reservoir bead plate and includes a mounting wall portion **308,** at least one side wall portion **310,** a partition wall portion **312** and an outer peripheral wall portion **314.** As indicated above, the walls or wall portions of end member **300** can be formed, assembled and/or otherwise constructed in any suitable manner, and can include one or more walls and/or wall portions connected in any suitable manner and that include any combination of one or more of the foregoing and/or other walls or wall portions.

For example, end member **300** can be assembled from a wall section **316** that includes mounting wall portion **308** and at least one side wall portion **310.** In the arrangement shown in FIGS. 2 and 3, side wall portion **310** can extend axially from along mounting wall portion **308** and peripherally about axis **AX.** End member **300** can also include a wall section **318** that includes partition wall portion **312** and outer peripheral wall portion **314,** which extends axially from along the partition wall portion and extends peripherally about axis **AX.** Wall sections **316** and **318** can be secured to one another in any manner suitable for forming a substantially fluid tight connection between two or more of the wall portions thereof, such as by way of a flowed-material joint **320,** for example. It will be appreciated, however, that other configurations and/or constructions could alternately be used.

End member **300** can be secured on or along an associated structural component (e.g., upper structural component **USC)** in any suitable manner. For example, mounting studs **302** can extend through and be secured along mounting wall portion **308** and can project axially-outwardly from the mounting wall portion in a direction away from end member **400.** The mounting wall portion can be disposed in abutting engagement with the associate structural component (e.g., upper structural component **USC)** and can be secured thereto using mounting studs **302,** such as has been described above.

As described above, one or more of the end members of a gas spring and gas damper assembly in accordance with the subject matter of the present disclosure can include a damper volume, damper reservoir and/or other damping chamber that is separate from the spring chamber (e.g., spring chamber **202)** but that is capable of being placed in fluid communication with the spring chamber such that pressurized gas damping can be generated as a result of pressurized gas flow between the spring chamber and the volume, reservoir or other chamber of the one or more end members. In the arrangement shown in FIGS. 2 and 3, for example, end member **300** includes a damper reservoir **322** that is at least partially formed by one or more wall portions of the end member, such as one or more of mounting wall portion **308,** side wall portion **310** and/or partition wall portion **312,** for example.

It will be appreciated that the damper volume, damper reservoir or other damping chamber of an end member can, in some cases, be in fluid communication with one or more pressurized gas sources, pressurized gas transfer lines and/or other pressurized gas volumes, reservoirs and/or chambers in any suitable manner. For example, reservoir **322** is shown as being in fluid communication with transfer passage **306,** which can permit fluid communication with one or more other gas spring and gas damper assemblies (e.g., one or more of assemblies **102)** and/or one or more components of a pressurized gas system, such as has been described above in connection with suspension system **100** and pressurized gas system **104,** for example.

Furthermore, it will be appreciated that the one or more end members of the gas spring and gas damper assembly can be operatively connected or otherwise secured to the flexible spring member in any suitable manner. For example, end member **300** is shown as being secured to end **206** of flexible wall **204** using a crimped-edge connection (not numbered) in which outer peripheral wall portion **314** of end member **300** is crimped or otherwise deformed around mounting bead **210** such that a substantially fluid-tight seal is formed therebetween.

As another example, end member **400** is shown as being of a type commonly referred to as a piston (or a roll-off piston), and can include a mounting wall portion **404,** a side wall portion **406** and a partition wall portion **408.** In some cases, end member **400** can also include an end wall portion **410** and a side wall portion **412.** In the arrangement shown in FIGS. 2 and 3, for example, mounting wall portion **404** at least partially defines a wall section **414,** and at least side wall portion **406** and partition wall portion **408** define a wall section **416** of end member **400.** In some cases, wall section **414** can at least partially form a component that may be referred to as a piston base, and wall section **416** can at least partially form a component may be referred to as a piston shell. Additionally, it will be appreciated that wall sections **414** and **416** can be secured to one another in any manner suitable for forming a substantially fluid tight connection between two or more of the wall portions thereof, such as by way of a flowed-material joint **418,** for example. It will be appreciated, however, that other configurations and/or constructions could alternately be used.

As described above, one or more of the end members of a gas spring and gas damper assembly in accordance with the subject matter of the present disclosure can include a damper volume, damper reservoir and/or other damping chamber that is separate from the spring chamber (e.g., spring chamber **202)** but that is capable of being placed in fluid communication with the spring chamber such that pressurized gas damping can be generated as a result of pressurized gas flow between the spring chamber and the volume, reservoir or other chamber of the one or more end members. In the arrangement shown in FIGS. 2 and 3, for example, end member **400** includes a damper reservoir **420** that is at least partially formed by one or more wall portions of the end member, such as one or more of mounting wall portion **404,** side wall portion **406** and/or partition wall portion **408,** for example.

In some cases, either or both of the end members can include one or more additional features, elements and/or components, such as within the damper reservoir thereof, for example. As one non-limiting example, end member **400** shown in FIG. 3 as including a post or column **422** that extends between an end (not numbered) operatively connected to mounting wall portion **404** and an end (not numbered) operatively connected to partition wall portion **408.** It will be appreciated that such a post, which is optional, can be secured on or along mounting wall portion **404** and/or partition wall portion **408** in any suitable manner. For example, one end of post **422** can be secured to mounting wall portion **404** in a manner suitable for forming a substantially fluid-tight connection with the mounting wall portion, such as by way of a flowed-material joint **424,** for example.

It will be recognized that a wide variety of sizes, shapes, profiles and/or configurations can and have been used in forming end members of the type and kind referred to as pistons or roll-off pistons, such as end member **400,** for example. As such, it will be appreciated that the wall portions of the end member (e.g., side wall portion **404)** can be of any suitable shape, profile and/or configuration, such as may be useful to provide one or more desired performance characteristics, for example, and that the profile shown in FIGS. 2 and 3 is merely exemplary.

Side wall portion **406** of end member **400** has an outer surface **426** that abuttingly engages flexible spring member **200** such that a rolling lobe **216** is formed along flexible wall **204.** As gas spring and gas damper assembly **AS1** is displaced between compressed and extended conditions, rolling lobe **216** can be displaced along outer surface **426** in a generally conventional manner.

End member **400** can be secured on or along an associated structural component (e.g., lower structural component **LSC)** in any suitable manner. For example, mounting wall portion **404** can be disposed in abutting engagement with the associated structural component (e.g., lower structural component **LSC)** and can be secured thereto using threaded fastener **402,** such as has been described above. In such cases, one or more threaded connections can be provided on or along end member **400** in any suitable manner. As one example, post **422** can include a threaded passage **428** that is accessible from along the exterior of the end member. Threaded fastener **402** can extend through one of mounting holes **HLS** in lower structural component **LSC** and threadably engage mounting wall portion **404** or another feature or component of end member **400,** such as threaded passage **428** of post **422,** for example, to secure the end member on or along the lower structural component. It will be appreciated, however, that other configurations and/or constructions could alternately be used.

As indicated above, it will be appreciated that the one or more end members of the gas spring and gas damper assembly can be operatively connected or otherwise secured to the flexible spring member in any suitable manner. For example, wall section **416** of end member **400** can include side wall portion **412** that extends longitudinally-outwardly beyond partition wall portion **408** and/or end wall portion **410,** and extends peripherally about axis **AX.** It will be appreciated that side wall portion **412** can be secured to one or more other wall portions of wall section **416** in any suitable manner. As one example, side wall portion **412** can be secured on or along partition wall portion **408** and/or end wall portion **410** such that a substantially fluid-tight seal is formed therebetween, such as by way of a flowed-material joint **430,** for example. In some cases, side wall portion **412** can be positioned such that end wall portion **410** extends radially outward from along side wall portion **412** toward side wall portion **406** and partition wall portion **408** extends radially inward from along side wall portion **412.**

Side wall portion **412** has an outer surface **432** that is dimensioned to receive mounting bead **212** of end **208** of flexible wall **204** such that a substantially fluid-tight seal can be formed therebetween. In some cases, a retaining ridge **434** can project radially outward from along the side wall portion **412** and can extend peripherally along at least a portion thereof, such as may assist in retaining end **208** of flexible wall **204** in abutting engagement on or along the side wall portion.

It will be appreciated that a gas spring and gas damper assembly in accordance with the subject matter of the present disclosure (e.g., assemblies **102** and/or **AS1)** can include any number of one or more additional features, components and/or devices. For example, gas spring and gas damper assembly **AS1** can, optionally, include a jounce bumper supported on one of the end members and suitable for inhibiting direct contact between the end members and/or transferring axially-applied loads or forces between the end members. It will be appreciated that the jounce bumper, if included, can be of any suitable size, shape and/or construction, and can be secured on or along the associated end member in any suitable manner. In the arrangement shown in FIG. 3, for example, gas spring and gas damper assembly **AS1** includes a jounce bumper **436** that is supported along end member **400** and includes a distal end wall **438** dimensioned to abuttingly engage end member **300** or another component, such as may occur during a jounce or collapsed condition of the gas spring and gas damper assembly.

In some cases, a bumper mount **440** can be disposed on or along end member **400** and can be dimensioned to receive and retain jounce bumper **436.** It will be appreciated that bumper mount **440** can be secured to the end member in any suitable manner. As one example, partition wall portion **408** can include a hole or opening (not numbered) extending therethrough and post **422** can include a threaded passage **442** that is accessible through the opening in partition wall portion **408.** Bumper mount **440** can include a threaded stud (not numbered) that can operatively engage threaded passage **442** of post **422** to thereby secure the bumper mount on or along end member **400.** Additionally, in this manner, axially applied loads or forces can be transmitted from jounce bumper **436,** through post **422** to mounting wall portion **404,** such as from impacts imparted on the jounce bumper, for example. It will be appreciated, however, that other configurations and/or arrangements could alternately be used.

As indicated above, a gas spring and gas damper assembly in accordance with the subject matter of the present disclosure can include one or more elongated gas damping passages fluidically connected between the spring chamber and one or more gas damper reservoirs. In such constructions, pressurized gas damping performance exceeding that provided by conventional gas damping orifice designs can be achieved through the use of such one or more elongated gas damping passages, particularly with respect to a given or otherwise predetermined range of frequencies of vibration or other dynamic input.

Generally, the one or more elongated gas damping passages can be dimensioned such that pressurized gas flows into, out of and/or otherwise is displaced within the elongated gas damping passage or passages. As a result, such pressurized gas flow can generate pressurized gas damping of vibrations and/or other dynamic inputs acting on the overall assembly and/or system. In a preferred arrangement, such pressurized gas damping can be configured for or otherwise targeted to dissipate vibrations and/or other dynamic inputs having a particular, predetermined natural frequency or within a particular, predetermine range of frequencies.

As discussed above, a gas spring and gas damper assembly in accordance with the subject matter of the present disclosure can include an elongated gas damping passage in fluid communication between the spring chamber and an associated gas damper reservoir (e.g., one of gas damper reservoirs **322** and **420).** Differential pressure between the associated chambers (e.g., spring chamber **202** and one of gas damper reservoirs **322** and **420)** can induce gas flow along at least a portion of the length of the elongated gas damping passage. It will be appreciated that such movement of the pressurized gas within and/or through an elongated gas damping passage can act to dissipate kinetic energy acting on the assembly and/or system.

It will be appreciated that the cross-sectional area and overall length of the elongated gas damping passage can be dimensioned, sized and/or otherwise configured to generate gas flow having sufficient mass and sufficient velocity to achieve the desired level of pressurized gas damping. Additionally, in a preferred arrangement, the elongated gas damping passages can be dimensioned, sized and/or otherwise configured such that one or more performance characteristics, such as peak Loss Stiffness, for example, of the system occur at approximately a desired or target frequency or otherwise within a desired or targeted frequency range. Non-limiting examples of targeted frequency ranges can include vibrations from 1-4 Hz, vibrations from 8-12 Hz and vibrations from 15-25 Hz.

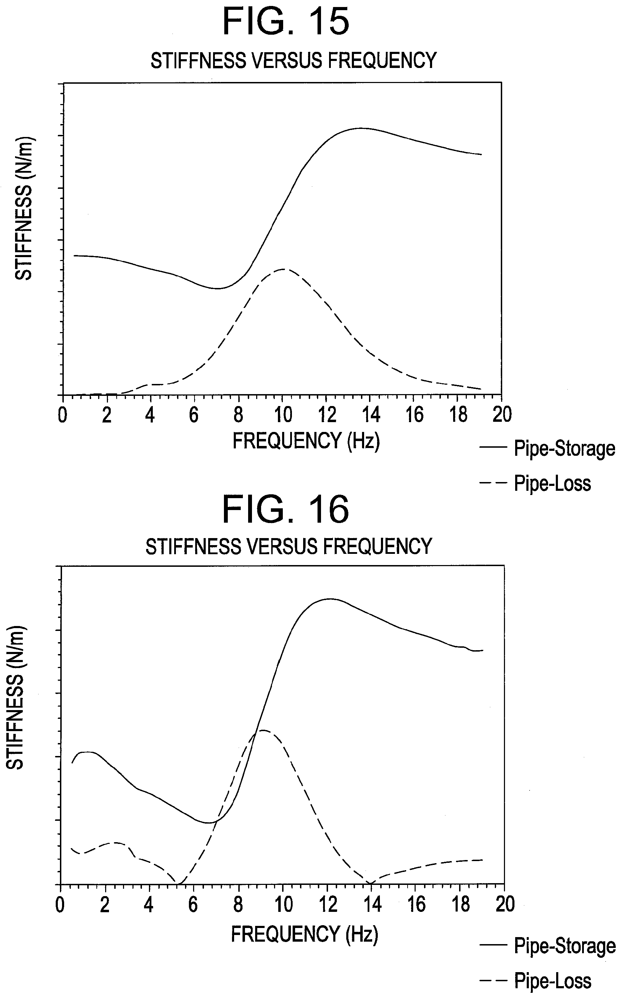

FIG. 15 a graphical representation of one example of performance characteristics of a gas spring and damper assembly that includes an elongated gas damping passage in accordance with the subject matter of the present disclosure. More specifically, FIG. 15 is a graphical representation of stiffness versus frequency and includes a plot line representing pipe storage and a plot line representing pipe loss. It will be recognized from FIG. 15 that peak loss stiffness of the pipe loss plot line occurs at approximately 10 Hz or within a range of from approximately 8-12 Hz, which can respectively correspond to or otherwise represent a targeted frequency or targeted range of frequencies for vibration damping.

As discussed above, a gas spring and gas damper assembly in accordance with the subject matter of the present disclosure can include a combination of features and/or components suitable for generating pressurized gas damping at two or more predetermined or targeted frequencies or otherwise within two or more predetermined or otherwise targeted ranges of frequencies. FIG. 16 a graphical representation of another example of performance characteristics of a gas spring and damper assembly that includes a combination of a first elongated gas damping passage as well as a second elongated damping passage and/or one or more other control devices in accordance with the subject matter of the present disclosure. More specifically, FIG. 16 is a graphical representation of stiffness versus frequency and includes a plot line representing pipe storage and a plot line representing pipe loss. It will be recognized from FIG. 16 that two occurrences of peak loss stiffness of the pipe loss plot line are represented. It will be appreciated that the combination of spring chamber, gas damping reservoir or reservoirs, elongated gas damping passage or passages and/or any additional control devices can generate pressurized gas damping having a peak loss stiffness at approximately 2.5 Hz or within a range of from approximately 1-4 Hz and a peak loss stiffness at approximately 9 Hz or within a range of from approximately 7-11 Hz, which can respectively correspond to or otherwise represent targeted frequencies or targeted ranges of frequencies for vibration damping.

As discussed above, the combination of cross-sectional area and overall length of the elongated gas damping passage can be dimensioned, sized and/or otherwise configured to generate gas flow having sufficient mass and sufficient velocity to achieve the desired level of pressurized gas damping. Generally, a gas spring and gas damper assembly in accordance with the subject matter of the present disclosure can include an elongated gas damping passage that has an overall length that is at least (10) times the maximum dimension (either actual or as a diametric equivalent) of the cross-sectional shape (e.g., the diameter of a circular passage) of the elongated gas damping passage. In a preferred arrangement, the overall length of the elongated gas damping passage will be at least twenty (20) times the maximum dimension of the cross-sectional shape. In some cases, the overall length of the elongated gas damping passage can be at least fifty (50) times the maximum dimension of the cross-sectional shape of the elongated gas damping passage. In other cases, the overall length of the elongated gas damping passage can be at least one hundred (100) times the maximum dimension of the cross-sectional shape of the elongated gas damping passage. Non-limiting examples of suitable ranges for dimensions of an elongated gas damping passage in accordance with the subject matter of the present disclosure can include an inside cross-sectional dimension (e.g., inside diameter) within a range of from approximately five (5) millimeters to approximately fifty (50) millimeters and an overall length of from approximately one-half (0.5) meter to approximately five (5) meters.

It will be appreciated that the aforementioned maximum dimension of the cross-sectional shape of the elongated gas damping passage can be either actual or a theoretical equivalent dimension. For example, an actual diameter of a circular passage, a major diameter of an elliptical passage or a height or width of a rectangular passage could be used. For non-circular and/or irregularly-shaped passages, a theoretical equivalent maximum dimension could be used. As one example, the actual cross-sectional area of the passage could be determined as area A_{ACT}. A theoretical equivalent maximum cross-sectional dimension D_{EQV} of a theoretical circular passage having the same cross-sectional area as that of the non-circular and/or irregularly-shaped passage could be determined. As one example, the theoretical equivalent maximum cross-sectional dimension could be calculated by using the equation: ${D}_{EQV} = √ \left(\frac{4 {A}_{ACT}}{π}\right)$ It will be appreciated, however, that other determinations of a theoretical maximum cross-sectional dimension could alternately be used.

As shown herein, the one or more elongated gas damping passages are typically disposed within the associated gas spring and gas damper assembly. In some cases, substantially all of the elongated gas damping passages can be provided outside of the spring chamber (e.g., spring chamber 202), such as by extending within or through one of the end members (e.g., end members **300** and/or **400).** It will be appreciated, however, that the one or more elongated gas damping passages can be configured or otherwise arranged within the gas spring and gas damper assembly in any suitable manner, such as by having one or more portions or sections that are linear, coiled, curved, serpentine or any combination of these and/or other configurations and/or arrangements. In some cases, performance benefits may be achieved in comparison with other configurations by using a coiled or helical arrangement in which the elongated gas damping passage extends about an axis through at least a portion of at least one turn of a helix such that first and second portions and/or ends of the elongated gas damping passage can be disposed in axially-spaced relation to one another. In such cases, it will be appreciated that any suitable coil dimension can be used, such as an outside diameter within a range of from approximately twenty (20) millimeters to approximately five hundred (500) millimeters, for example.

It will be appreciated that the one or more elongated gas damping passages can provided in any suitable manner and through the use of any suitable combination of one or more features, elements and/or components. For example, one or more elongated gas damping passages can be at least partially formed by one or more components that are provided separately from the one or more walls and/or wall portions of the end members. As another example, one or more elongated gas damping passages can be at least partially formed by one or more walls and/or wall portions of one or more of the end members.

As one non-limiting example, gas spring and gas damper assembly **AS1** is shown in FIGS. 2 and 3 as including an elongated gas damping passage **444** that is at least substantially-entirely disposed within gas damper reservoir **420,** and extends between a passage end **446** disposed in fluid communication with spring chamber **202** and a passage end **448** disposed in fluid communication with gas damper reservoir 420. The elongated gas damping passage will have an overall length (not represented) and a cross-sectional shape with a maximum cross-sectional dimension, such as is represented by reference dimension **DM** (FIG. 3), for example. Non-limiting examples of suitable cross-sectional shapes for the elongated gas damping passage (e.g., passage **444)** can include approximately circular, ovoid, elliptical, rectangular, square and/or other curved or polygonal shapes. In some cases, the cross-sectional shape may be substantially uniform along the length of the passage. In other cases, different sections or portions of the elongated gas damping passage can have different cross-sectional shapes.

As indicated above, elongated gas damping passage **444** can be formed in any suitable manner and from any suitable combination of features, elements and/or components. In the arrangement shown in FIG. 3, elongated gas damping passage **444** is shown as being at least partially formed by an elongated length of tubular material (not numbered) that is arranged in or otherwise extends through a plurality of helical coils or loops. As discussed above, however, it will be appreciated that any other configuration and/or arrangement could alternately be used. Additionally, the elongated length of tubular material can be formed from any suitable material or combination of materials, such as metal (e.g., aluminum, brass, copper, steel) and/or polymeric materials (e.g., rigid or flexible thermoplastic material). Furthermore, the elongated length of tubular material can be formed into or otherwise include a tube wall **450** that at least partially defines elongated gas damping passage **444.** Tube wall **450** can include a tube end **452** through which passage end **446** extends and a tube end **454** through which passage end **448** extends.

It will be appreciated that tube wall **450** can be secured to or otherwise operatively connected with one or more walls and/or wall portions of end member **400** in any suitable manner. For example, end member **400** can include a port or opening **456** extending through partition wall portion **408,** and tube end **452** can be secured on or along partition wall portion **408** in any manner suitable for passage end **446** to be disposed in fluid communication with port **456.** As one example, a connector fitting **458** can be secured on or along partition wall portion **408,** such as by way of a flowed-material joint **460,** for example. The connector fitting can be dimensioned to receive and retain the tube end. It will be appreciated, however, that other configurations and/or arrangements could alternately be used.

As another non-limiting example, gas spring and gas damper assembly **AS1** can, additionally or in the alternative, include an elongated gas damping passage **324** that is at least substantially-entirely disposed within gas damper reservoir 322. Elongated gas damping passage **324** can extend between a passage end **326** disposed in fluid communication with spring chamber **202,** such as by way of an opening or port **328** extending through partition wall portion **312,** for example. Additionally, elongated gas damping passage **324** can include a passage end **330** disposed in fluid communication with gas damper reservoir **322.** The elongated gas damping passage will have an overall length (not represented) and a cross-sectional shape with a maximum cross-sectional dimension (not identified), such as an approximately circular, ovoid, elliptical, rectangular, square or other curved or polygonal shape, for example. As indicated above, the cross-sectional shape can, in some cases, be substantially uniform along the length of the passage. In other cases, different sections or portions of the elongated gas damping passage could have different cross-sectional shapes.

As indicated above with respect to elongated gas damping passage **444,** passage **324** can be formed in any suitable manner and from any suitable combination of features, elements and/or components, such as an elongated length of tubular material (not numbered) that is arranged in or otherwise extends through a plurality of helical coils or loops. As discussed above, however, it will be appreciated that any other configuration and/or arrangement could alternately be used, such as annular and/or serpentine, for example. Additionally, the elongated length of tubular material can be formed from any suitable material or combination of materials, such as metal (e.g., aluminum, brass, copper, steel) and/or polymeric materials (e.g., rigid or flexible thermoplastic material). Furthermore, the elongated length of tubular material can be formed into or otherwise include a tube wall (not shown) that at least partially defines elongated gas damping passage **324.** As discussed above in connection with tube wall **450,** the tube wall of passage **324** can include a tube end (not shown) through which passage end **326** extends and a tube end (not shown) through which passage end **330** extends, and can, as one example, be secured on or along the end member in a similar manner to that discussed above in connection with connector fitting **458.** It will be appreciated, however, that any other suitable configuration and/or arrangement could alternately be used.

Additionally, or as an alternative to one of elongated gas damping passage **324** and/or **444,** a gas spring and gas damper assembly according to the subject matter of the present disclosure can, optionally, include one or more flow control systems that are operatively connected between the spring chamber and one of the one or more pressurized gas volumes, pressurized gas reservoirs and/or other pressurized gas chambers. In some cases, a plurality of flow control systems can be included with the flow control systems disposed in fluid communication in any combination and/or arrangement between the spring chamber and the one or more pressurized gas damping reservoirs.

In a preferred arrangement, the one or more flow control systems can be adapted to selectively permit and/or inhibit pressurized gas flow between the spring chamber and the corresponding pressurized gas volume in one or more directions of flow under pre-determined differential pressure conditions. It will be appreciated that the flow control systems can be of any suitable size, shape, configuration and/or construction, and can include any combination of features and components suitable for generating pressurized gas damping of vibrations acting on the gas spring and gas damper assembly. In some cases, a flow control system can include one or more gas flow passages and one or more control devices operatively associated with the gas flow passages. In some cases, two or more control devices can be included with each control device operatively associated with a different gas flow passage. Additionally, in some cases, the one or more control devices can be differential pressure-actuated control devices that open and close in response to pre-determined differential pressure conditions between the spring chamber and the corresponding pressurized gas damping reservoir or other volume.

In a preferred arrangement, a combination of the performance characteristics of a flow control system and the performance characteristics of the pressurized gas damping reservoir or other volume can be tuned or otherwise selected or configured to generate damping of vibrations at a predetermined or target frequency or within or otherwise across a predetermined and/or targeted frequency range. In some cases, the gas spring and gas damper assembly can include two or more different flow control systems fluidically associated with a different pressurized gas damping reservoirs. In such cases, pressurized gas damping of vibrations can be achieved that is tuned to two or more different targeted or otherwise predetermined frequency ranges, such as has been discussed above, for example.

Examples of suitable constructions of flow control systems of a gas spring and gas damper assembly in accordance with the subject matter of the present disclosure are identified in FIG. 3 as flow control systems **332** and **462.** Flow control system **332** is shown as being disposed on or along partition wall portion **312** of end member **300.** As such, flow control assembly **332** is operatively associated with corresponding damper reservoir **322** such that pressurized gas damping can be generated as a result of pressurized gas transfer into, out of and/or between spring chamber **202** and damper reservoir **322.** Additionally, flow control system **462** is shown as being disposed on or along partition wall portion **408** of end member **400.** As such, flow control assembly **462** is operatively associated with corresponding damper reservoir **420** such that pressurized gas damping can be generated as a result of pressurized gas transfer into, out of and/or between spring chamber **202** and damper reservoir **420.**

In the arrangement shown in FIG. 3, flow control assembly **332** is shown as including gas flow ports or passages **334** and **336** that extend through partition wall portion **312.** As such, flow control assembly **332** can be operative to permit, inhibit and/or otherwise at least partially control pressurized gas flow between spring chamber **202** and damper reservoir **322** through ports **334** and **336.** Flow control assembly **332** can also include at least one control device (e.g., a valve) that is fluidically associated with a corresponding one of the gas flow ports. In the arrangement shown in FIG. 3, two control devices are included with a control device **338** operatively associated with port **334** and a control device **340** operatively associated with port **336.**

Additionally, flow control assembly **462** is shown as including gas flow ports or passages **464** and **466** that extend through partition wall portion **408.** As such, flow control assembly **462** can be operative to permit, inhibit and/or otherwise at least partially control pressurized gas flow between spring chamber **202** and damper reservoir **420** through ports **464** and **466.** Flow control assembly **462** can also include at least one control device (e.g., a valve) that is fluidically associated with a corresponding one of the gas flow ports. In the arrangement shown in FIG. 3, two control devices are included with a control device **468** operatively associated with port **464** and a control device **470** operatively associated with port **466.**

In some cases, one or more of the control devices (e.g., one or more of control devices **338, 340, 468** and/or **470)** can take the form of one-way valves that substantially inhibit pressurized gas flow through a corresponding port in one direction, as is represented in FIG. 3 by dashed arrows **NFL,** while permitting pressurized gas flow through the corresponding port in the opposing direction, as is represented in FIG. 3 by arrows **PGF.** For example, control devices **338, 340, 468** and **470** are shown as taking the form of normally-closed valves that are naturally biased toward a closed condition and that are actuated or otherwise opened as a result of a gas pressure differential acting on the control devices. As such, control devices **338** and **340** are shown as being disposed along opposing surfaces **342** and **344** of partition wall portion **312,** and control devices **468** and **470** are shown as being disposed along opposing surfaces **472** and **474** of partition wall portion **408.** It will be appreciated, however, that other configurations and/or arrangements could alternately be used.

Additionally, it will be appreciated that any combination of one or more types, kinds and/or constructions of control devices can be used. In the arrangement shown in FIG. 3, for example, control devices **338, 340, 468** and **470** are shown as taking the form of spring-biased piston valves that are substantially similar to one another. The control valves can include a valve body (not numbered) that is received within one of the ports. As one example, the valve body can includes a head (not numbered) that abuttingly engages the partition wall portions, a connecting rod (not numbered) that extends axially from the head and a flange (not numbered) that is secured along the connecting rod opposite the head. Additionally, the control devices can include a biasing element (not numbered), such as a compression spring, for example, that is operatively disposed between the flange and a surface of the partition wall portion.

The valve body of one or more of the control devices (e.g., one or more of control devices **338, 340, 468** and/or **470)** can be maintained in a normally-closed condition in any suitable manner that is capable of being selectively displaced into an open condition under the influence of a predetermined (or greater) gas pressure differential, as discussed above. In some cases, the valve body can be urged or otherwise biased into a closed condition by the biasing element. In such cases, the biasing element can have intrinsic mechanical and/or material properties (e.g., spring rate and/or flexural stiffness) that maintain the associated control device in a closed condition until a predetermined differential gas pressure is reached or exceeded. Upon experiencing differential pressure conditions of at least approximately the predetermined magnitude, the biasing element can be compressed and the valve body can be displaced into an open condition, such as is illustrated by dashed lines **DFL** in FIG. 3, for example.

Additionally, or as a further alternative to one of elongated gas damping passage **324** and/or **444** and/or as a further alternative to either or both of control devices **332** and/or **462** (or a portion thereof), a gas spring and gas damper assembly in accordance with the subject matter of the present disclosure can, optionally, include any combination of additional control devices, such as are schematically represented in FIG. 3 by boxes **CD1, CD2** and **CD3.** It will be appreciated that control device **CD1** is shown as being disposed in fluid communication with elongated gas damping passage **444** adjacent passage end **446** and that control device **CD3** is shown as being disposed in fluid communication with elongated gas damping passage **444** adjacent passage end **448** with control device **CD2** disposed in fluid communication with the elongated damping passage in an intermediate position between passage ends **446** and **448.** It will be appreciated, however, that other configurations and/or arrangements could alternately be used. Importantly, though not shown in FIG. 3 as being used in connection with elongated gas damping passage **324,** it is to be recognized and appreciated that any one or more of control devices **CD1, CD2** and/or **CD3** can be used in operative association with elongated gas damping passage **324,** such as in the manner described above in connection with elongated gas damping passage **444,** for example, and that the foregoing description of such application and use is equally applicable to elongated gas damping passage **324** without limitation.

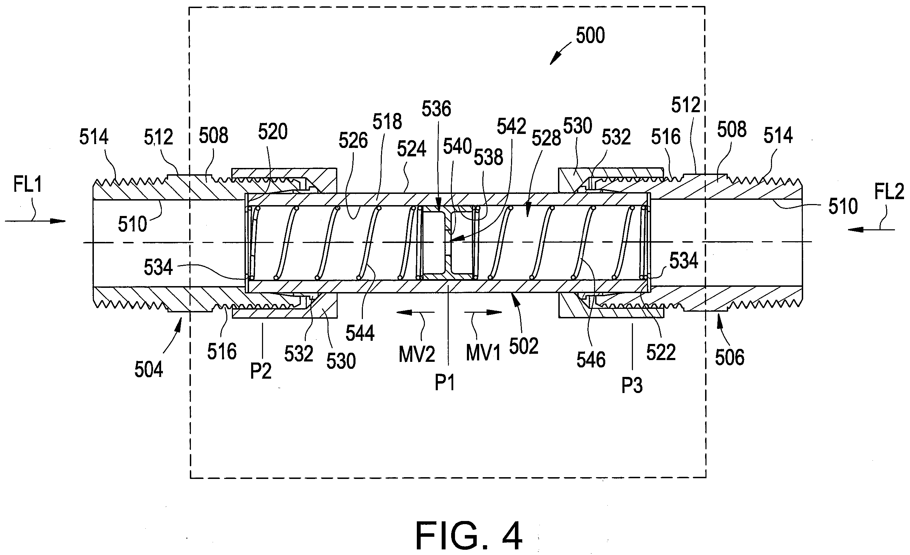

One example of a control device **500** that is suitable for use as one or more of control devices **CD1, CD2** and/or **CD3** is shown in FIG. 4 as including a housing **502** that is operatively secured to connector fittings **504** and **506** in a manner suitable for forming a substantially fluid-tight connection between housing **502** and the connector fittings. In the arrangement shown in FIG. 4, connector fittings **504** and **506** are disposed along opposing ends of the control device. It will be appreciated that connector fittings **504** and **506** can be dimensioned and configured for securement in fluid communication on or along one of the elongated gas damping passages, such as one or more of passages **324** and/or **444,** for example, in any suitable manner. For example, connector fittings **504** and **506** can include a fitting wall **508** that includes an inner surface **510** and an outer surface **512.** The connector fittings can include at least one helical thread formed along at least one of the opposing ends of the fitting wall. In the arrangement shown, connector fittings **504** and **506** include helical threads **514** and **516** formed along outer surface **512** of the fitting wall.

Housing **502** includes a housing wall **518** that extends lengthwise between opposing end edges **520** and **522.** Housing wall **518** includes an outer surface **524** and an inner surface **526** that at least partially defines a passage **528** extending lengthwise through housing **502.** In a preferred arrangement, inner surfaces **510** of connector fittings **504** and **506** are dimensioned to cooperate with inner surface **526** such that passage **528** can extend through control device **500.** Connector fittings **504** and **506** can be secured on or along housing **502** in any suitable manner, such as by way of a threaded nut **530** and compression element **532,** for example, that can cooperatively engage housing **502** and one of the connector fittings in a conventional manner. In some cases, a washer or other element **534** can be captured between one of end edges **520** and **522** and a corresponding one of connector fittings **504** and **506,** such as may be useful for providing a shoulder surface for engaging another component and/or to further act as a sealing element between the housing and a corresponding one of the connector fittings, for example.

Control device **500** can also include a displaceable element **536** that is disposed within passage **528.** Element **536** can include an outer surface **538** disposed adjacent inner surface **526** of housing wall **518.** The displaceable element can also include an inner surface **540** that at least partially defines an orifice **542** extending through element **536.** Control device **500** further includes biasing elements **544** and **546** that are disposed along opposing sides of displaceable element **536** and engage a shoulder surface (not numbered), such as can be formed by washer elements **534,** for example. Biasing elements **544** and **546** can permit displaceable element **536** to move within passage **528** under the influence of pressurized gas flow into, out of or otherwise within control device **500,** such as in the manner described hereinafter, for example.

In some cases, biasing elements **544** and **546** can maintain displaceable element **536** in a central position within passage **528,** which is represented in FIG. 4 by reference number **P1.** Depending upon various features and/or characteristics of the control device, displaceable element and biasing elements, position **P1** can, in some cases, correspond to a no-flow condition or pressurized gas flow condition through control device **500** that is below a predetermined flow rate or pressurized gas flow threshold.

During use in fluid communication with an elongated gas damping passage in accordance with the subject matter of the present disclosure, such as one or more of passages **324** and/or **444,** for example, displaceable element **536** can float or otherwise move in response to pressurized gas flow within passage **528.** For example, as pressurized gas flows into, out of and/or otherwise within control device from a direction represented by arrow **FL1,** displaceable element **536** can undergo movement within passage **528** in the direction represented by arrow **MV1.** Oppositely, as pressurized gas flows into, out of and/or otherwise within control device from a direction represented by arrow **FL2,** displaceable element can undergo movement within passage **528** in the direction represented by arrow **MV2.** Under pressurized gas flow conditions corresponding to higher frequency, lower amplitude vibrations (e.g., higher velocity, lower gas volume displacement), displaceable element **536** can float or otherwise move within passage **528** together as the pressurized gas is displaced within passage **528.** Under pressurized gas flow conditions corresponding to lower frequency, higher amplitude vibrations (e.g., lower velocity, higher gas volume displacement), displaceable element **536** can be displaced to, from and between end positions **P2** and **P3.** During such conditions of use, displaceable element **536** can function for a brief or instantaneous period as a fixed orifice with damping generated due to pressurized gas flow through orifice **542.**

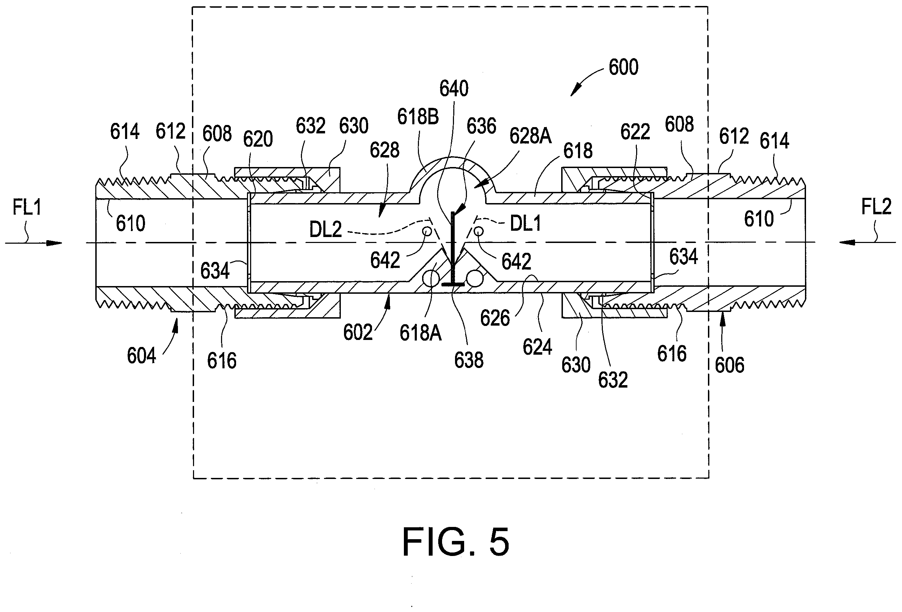

Another example of a control device **600** that is suitable for use as one or more of control devices **CD1, CD2** and/or **CD3** is shown in FIG. 5 as including a housing **602** that is operatively secured to connector fittings **604** and **606** in a manner suitable for forming a substantially fluid-tight connection between housing 602 and the connector fittings. In the arrangement shown in FIG. 4, connector fittings **604** and **606** are disposed along opposing ends of the control device. It will be appreciated that connector fittings **604** and **606** can be dimensioned and configured for securement in fluid communication on or along one of the elongated gas damping passages, such as one or more of passages **324** and/or **444,** for example, in any suitable manner. For example, connector fittings **604** and **606** can include a fitting wall **608** that includes an inner surface **610** and an outer surface **612.** The connector fittings can include at least one helical thread formed along at least one of the opposing ends of the fitting wall. In the arrangement shown, connector fittings **604** and **606** include helical threads **614** and **616** formed along outer surface **612** of the fitting wall.

Housing **602** includes a housing wall **618** that extends lengthwise between opposing end edges **620** and **622.** Housing wall **618** includes an outer surface **624** and an inner surface **626** that at least partially defines a passage **628** extending lengthwise through housing **602.** In a preferred arrangement, inner surfaces **610** of connector fittings **604** and **606** are dimensioned to cooperate with inner surface **626** such that passage **628** can extend through control device **600.** Connector fittings **604** and **606** can be secured on or along housing **602** in any suitable manner, such as by way of a threaded nut **630** and compression element **632,** for example, that can cooperatively engage housing **602** and one of the connector fittings in a conventional manner. In some cases, a washer or other element **634** can be captured between one of end edges **620** and **622** and a corresponding one of connector fittings **604** and **606,** such as may be useful for providing a shoulder surface for engaging another component and/or to further act as a sealing element between the housing and a corresponding one of the connector fittings, for example.

Control device **600** can also include a displaceable element **636** that is disposed within passage **628.** Element **636** can include opposing surfaces (not numbered) facing outwardly toward end edges **620** and **622.** Additionally, element **636** can extend from a mounting end **638** supported along housing wall **618** toward a distal end **640** that can be disposed within passage **628** or a chamber thereof. It will be appreciated that element **636** can be formed from combination of one or more components, which can be formed any combination of one or more materials. As one example, two or more L-shaped components formed from a metal material, such as steel, for example. The two L-shaped components can be arranged back-to-back to form element **636,** which is shown as having a T-shaped configuration.

Depending upon the size, shape and configuration of element **636,** the housing wall and passage can have a corresponding size, shape and configuration to permit the displaceable element to deflect under certain pressurized gas flow conditions through passage **628** and, generally, through control device **600.** As one example, housing wall **618** can have a generally circular cross-sectional shape that defines a passage having a substantially cylindrical overall configuration. As another example, a portion **618A** of housing wall **618** can at least partially define a mounting feature dimensioned to receive and retain mounting end **638** of element **636.** Additionally, a portion **618B** of housing wall **618** can project outwardly from the housing wall to at least partially form a passage chamber **628A.** In some cases, housing **602** can also include one or more support posts **642** disposed in offset relation to element **636** and dimensioned to substantially inhibit excessive deflection of element **636** under certain pressurized gas flow conditions.

During use in fluid communication with an elongated gas damping passage in accordance with the subject matter of the present disclosure, such as one or more of passages **324** and/or **444,** for example, displaceable element **636** can deflect in response to pressurized gas flow within and/or through passage 628. For example, as pressurized gas flows into, out of and/or otherwise within control device from a direction represented by arrow **FL1,** displaceable element **636** can undergo deflection within passage **628,** such as is represented by deflection line **DL1.** Oppositely, as pressurized gas flows into, out of and/or otherwise within control device from a direction represented by arrow **FL2,** displaceable element **636** can undergo deflection within passage **628,** such as is represented by deflection line **DL2.**

Under pressurized gas flow conditions corresponding to or otherwise associated with higher frequency, lower amplitude vibrations (e.g., higher velocity, lower gas volume displacement), displaceable element **636** can remain in a substantially undeflected condition, such as is illustrated in FIG. 5, for example, and pressurized gas can flow within passage **628,** such as by flowing around the displaceable element through passage chamber **628A.** Under pressurized gas flow conditions corresponding to lower frequency, higher amplitude vibrations (e.g., lower velocity, higher gas volume displacement), displaceable element **636** can be displaced into a deflected condition (e.g., line **DL1** and/or **DL2)** in which the size and/or shape of effective area of passage **628** is reduced, such as may be effective to increase resistance to pressurized gas flow and thereby improve pressurized gas damping performance.

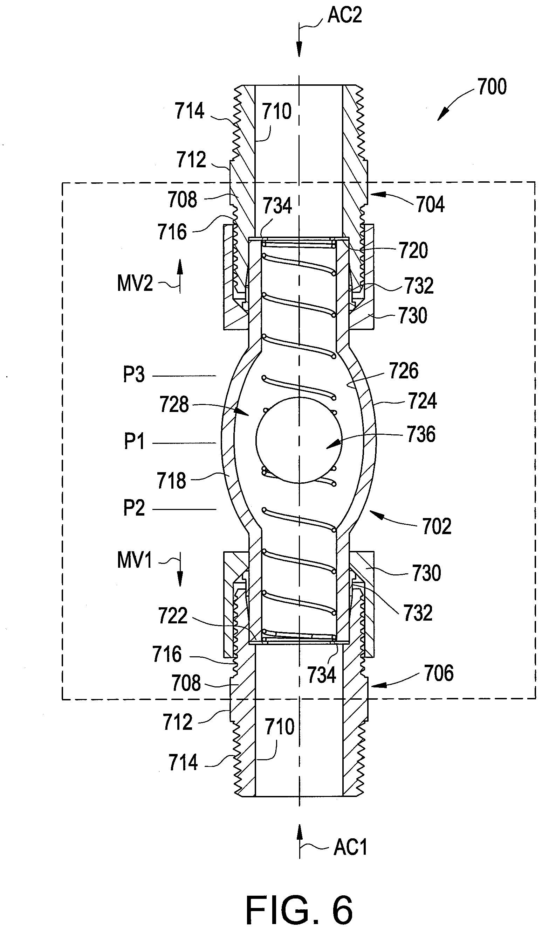

A further example of a control device **700** that is suitable for use as one or more of control devices **CD1, CD2** and/or **CD3** is shown in FIG. 6 as including a housing **702** that is operatively secured to connector fittings **704** and **706** in a manner suitable for forming a substantially fluid-tight connection between housing **702** and the connector fittings. In the arrangement shown in FIG. 6, connector fittings **704** and **706** are disposed along opposing ends of the control device. It will be appreciated that connector fittings **704** and **706** can be dimensioned and configured for securement in fluid communication on or along one of the elongated gas damping passages, such as one or more of passages **324** and/or **444,** for example, in any suitable manner. For example, connector fittings **704** and **706** can include a fitting wall **708** that includes an inner surface **710** and an outer surface **712.** The connector fittings can include at least one helical thread formed along at least one of the opposing ends of the fitting wall. In the arrangement shown, connector fittings **704** and **706** include helical threads **714** and **716** formed along outer surface **712** of the fitting wall.

Housing **702** includes a housing wall **718** that extends lengthwise between opposing end edges **720** and **722.** Housing wall **718** includes an outer surface **724** and an inner surface **726** that at least partially defines a passage **728** extending lengthwise through housing **702.** In a preferred arrangement, inner surfaces **710** of connector fittings **704** and **706** are dimensioned to cooperate with inner surface **726** such that passage **728** can extend through control device **700.** Connector fittings **704** and **706** can be secured on or along housing **702** in any suitable manner, such as by way of a threaded nut **730** and compression element **732,** for example, that can cooperatively engage housing **702** and one of the connector fittings in a conventional manner. In some cases, a washer or other element **734** can be captured between one of end edges **720** and **722** and a corresponding one of connector fittings **704** and **706,** such as may be useful for providing a shoulder surface for engaging another component and/or to further act as a sealing element between the housing and a corresponding one of the connector fittings, for example.

Control device **700** can also include a displaceable element **736** that is disposed within passage **728.** Element **736** can include an outer surface **738** dimensioned for receipt within passage **728.** Control device **700** can further include biasing elements **740** and **742** that are disposed along opposing sides of displaceable element **736** and engage a shoulder surface (not numbered), such as can be formed by washer elements **734,** for example. Biasing elements **740** and **742** can permit displaceable element **736** to move within passage **728** under the influence of dynamic inputs that may be acting on one or more components and/or elements of the gas spring and gas damper assembly. As one example, displaceable element **736** can be displaced under the influence of accelerations acting on an end member (e.g., end member **400)** of the gas spring and gas damper assembly. In this respect, control device **700** can differ from control devices **500** and **600,** which, as discussed above, can provide pressurized gas performance in response to pressurized gas flow into, out of or otherwise within the control devices.

In some cases, biasing elements **740** and **742** can maintain displaceable element **736** in a central position within passage **728,** which is represented in FIG. 6 by reference number **P1.** Depending upon various features and/or characteristics of the control device, displaceable element and biasing elements, position **P1** can, in some cases, correspond to a static or dynamic input condition associated with control device **700** that is below a predetermined acceleration or other dynamic input threshold.

During use in fluid communication with an elongated gas damping passage in accordance with the subject matter of the present disclosure, such as one or more of passages **324** and/or **444,** for example, displaceable element **736** can float or otherwise move in response to pressurized gas flow within passage **728** and/or in response to dynamic inputs acting on the control device. For example, as an acceleration or other dynamic input exceeding a predetermined threshold value acts on control device **700** in a direction represented by arrow **AC1,** displaceable element **736** can undergo movement within passage **728** in the direction represented by arrow **MV1** toward position **P2.** Oppositely, as an acceleration or other dynamic input exceeding a predetermined threshold value acts on control device **700** in a direction represented by arrow **AC2,** displaceable element can undergo movement within passage **728** in the direction represented by arrow **MV2** toward position **P3.**

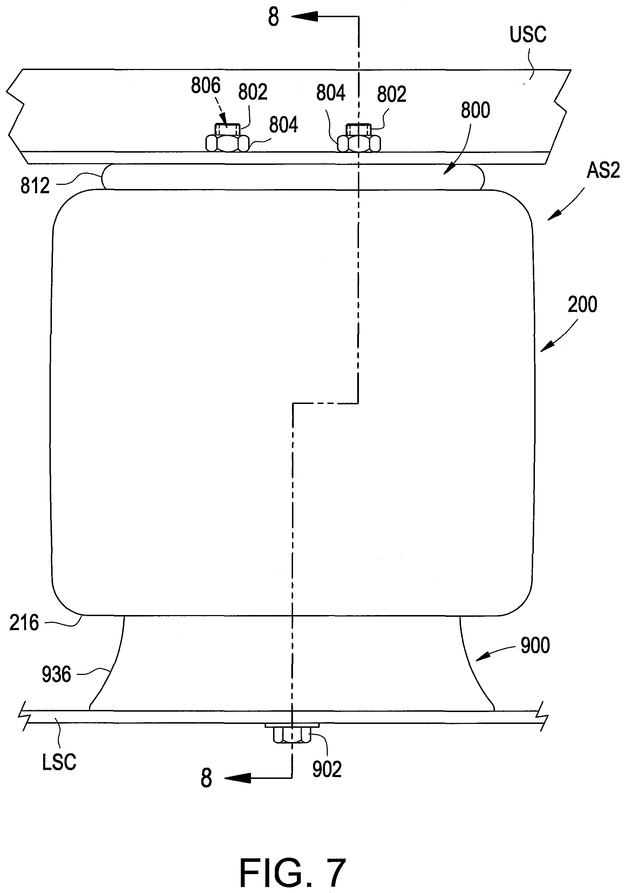

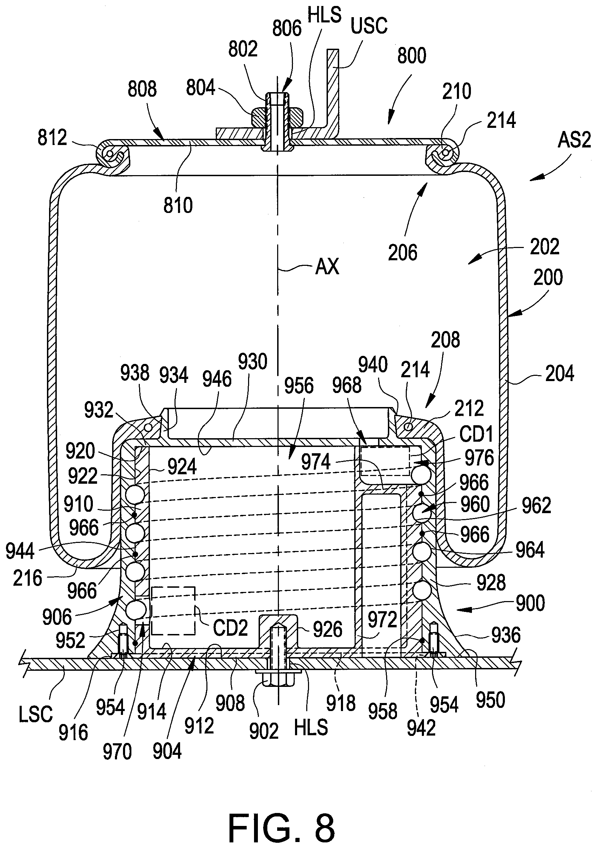

A gas spring and gas damper assembly **AS2** in accordance with the subject matter of invention, such as may be suitable for use as gas spring and gas damper assemblies **102,** for example, is shown in FIGS. 7-9. Gas spring and gas damper assembly **AS2** is shown as having a longitudinally-extending axis **AX** (FIG. 8) and includes one or more end members, such as an end member **800** and an end member **900** that is spaced longitudinally from end member **800.** Flexible spring member **200,** such as has been described in detail above, extends peripherally around axis **AX** and is secured between the end members in a substantially fluid-tight manner such that spring chamber **202** (FIG. 8) is at least partially defined therebetween.

Gas spring and gas damper assembly **AS2** can be disposed between associated sprung and unsprung masses of an associated vehicle in any suitable manner. For example, one end member can be operatively connected to the associated sprung mass with the other end member disposed toward and operatively connected to the associated unsprung mass. As shown in FIGS. 7 and 8, for example, end member **800** can be secured on or along a first or upper structural component **USC,** such as associated vehicle body **BDY** in FIG. 1, for example, and can be secured thereon in any suitable manner. For example, one or more securement devices, such as mounting studs **802,** for example, can be included along end member **800.** In some cases, the one or more securement devices (e.g., mounting studs **802)** can project outwardly from end member **800** and can be secured thereon in a suitable manner, such as, for example, by way of a flowed-material joint (not shown) or a press-fit connection (not identified). Additionally, such one or more securement devices can extend through mounting holes **HLS** in upper structural component **USC** and can receive one or more threaded nuts **804** or other securement devices, for example. As an alternative to one or more of mounting studs **802,** one or more threaded passages (e.g., blind passages and/or through passages) could be used in conjunction with a corresponding number of one or more threaded fasteners.

Additionally, one or more fluid communication ports, such as transfer passages **806,** for example, can, optionally, be provided to permit fluid communication with spring chamber **202,** such as may be used for transferring pressurized gas into and/or out of the spring chamber, for example. In the exemplary embodiment shown, transfer passages **806** extend through at least one of mounting studs **802** and are in fluid communication with spring chamber **202.** It will be appreciated, however, that any other suitable fluid communication arrangement could alternately be used.

End member assembly **900** can be secured on or along a second or lower structural component **LSC,** such as an axle **AXL** in FIG. 1, for example, in any suitable manner. As one example, lower structural component **LSC** could include one or more mounting holes **HLS** extending therethrough. In such case, a threaded fastener **902** could extend through one of mounting holes **HLS** and threadably engage end member **900** or another component of the assembly to secure the end member on or along the lower structural component.

Flexible spring member **200** has been described above in detail. Accordingly, a description of flexible spring member **200** is not repeated here. However, it is to be recognized and understood that the foregoing description of flexible spring member as well as the features, components, construction and materials thereof is equally applicable to the arrangement shown in FIGS. 7 and 8.

It will be appreciated that the end members and/or end member assemblies can be of any suitable type, kind, construction and/or configuration, and can be operatively connected or otherwise secured to the flexible spring member in any suitable manner. In the exemplary arrangement shown in FIGS. 7 and 8, for example, end member **800** is of a type commonly referred to as a bead plate and includes an end member wall **808** with a central wall portion **810** (FIG. 8) and an outer peripheral wall portion **812.** End member **800** is disposed along end **206** of flexible wall **204** with outer peripheral wall portion **812** crimped or otherwise deformed around at least a portion of mounting bead **210** such that a substantially fluid-tight seal can be formed between flexible spring member **200** and end member **800.**

It will be appreciated that end member **900** can be of any suitable size, shape, configuration and/or construction, and can include any suitable combination of features, elements and/or components. For example, end member **900** is shown as being of a type commonly referred to as a piston (or a roll-off piston), and can include a base section **904** and a shell section **906** that cooperatively engages base section **904** such that the shell section can be supported on or otherwise operatively connected to the base section. Additionally, base section **904** and shell section **906** can be attached or otherwise secured to one another in a manner suitable for securement of the end member on or along an associated structural component, such as along lower structural component **LSC** by way of threaded fastener **902,** for example.

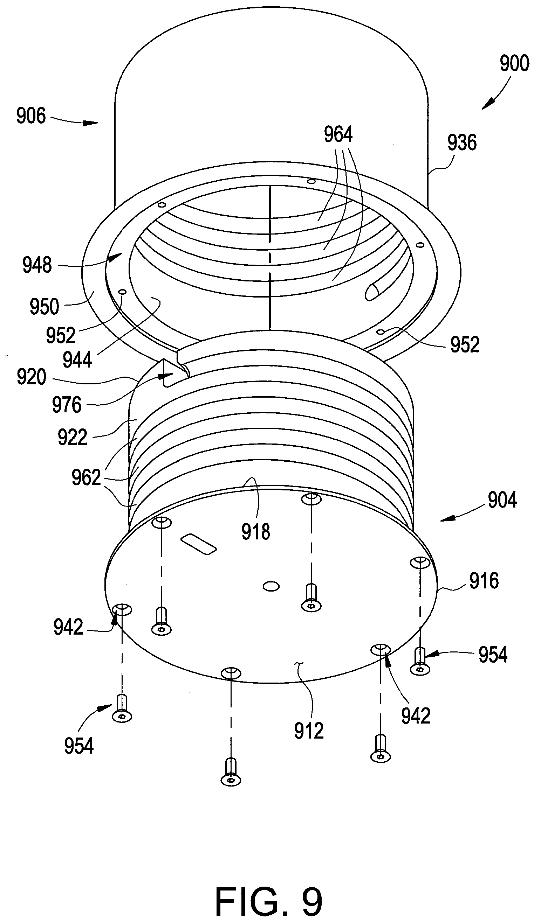

Base section **904** is shown in FIGS. 8 and 9 as including a base wall **908** that extends generally transverse to axis AX and a side wall **910** that project from along base wall **908** in a generally axial direction. Base wall **908** can have a surface **912** disposed in facing relation to lower structural component **LSC** and a surface **914** facing toward end member **800.** In some cases, base wall **908** can include an outer peripheral edge **916** that is disposed radially outward of side wall **910** and can include an outer shoulder surface **918** facing opposite surface **912.** Side wall **910** can extend from along base wall **908** toward a distal end surface **920** and can include an outer surface **922** and an inner surface **924.** In some cases, one or more securement features can be provided on or along base section **904,** such as may be suitable for securement of the base section to an associated structural component. As one example, a boss **926** can project from along surface **914** of base wall **908** in a direction toward end member **800.** The boss can include one or more helical threads or other securement features, such as may be suitable for receivingly engaging an associated securement device, such as threaded fastener **902,** for example. In such case, threaded fastener **902** can extend through one of mounting holes **HLS** in lower structural component **LSC** and threadably engage boss **924** of base section **904** or another feature or component of end member **900** to secure the end member on or along the lower structural component. It will be appreciated, however, that other configurations and/or constructions could alternately be used.

Shell section **906** can include a side wall portion **928** and a partition wall portion **930.** In some cases, shell section **906** of end member **900** can also include an end wall portion **932** and a side wall portion **934.** It will be recognized that a wide variety of sizes, shapes, profiles and/or configurations can and have been used in forming end members of the type and kind referred to as pistons or roll-off pistons, such as end member **900,** for example. As such, it will be appreciated that the wall portions of the end member (e.g., side wall portion **928)** can be of any suitable shape, profile and/or configuration, such as may be useful to provide one or more desired performance characteristics, for example, and that the profile shown in FIGS. 7-9 is merely exemplary. Side wall portion **928** of end member **900** has an outer surface **936** that abuttingly engages flexible spring member **200** such that rolling lobe **216** is formed along flexible wall **204.** As gas spring and gas damper assembly **AS2** is displaced between compressed and extended conditions, rolling lobe **216** can be displaced along outer surface **936** in a generally conventional manner.

As indicated above, it will be appreciated that the one or more end members of the gas spring and gas damper assembly can be operatively connected or otherwise secured to the flexible spring member in any suitable manner. For example, shell section **906** of end member **900** can include side wall portion **934** that extends longitudinally-outwardly beyond partition wall portion **930** and/or end wall portion **932,** and extends peripherally about axis **AX.** It will be appreciated that side wall portion **934** can be secured to one or more other wall portions of shell section **906** in any suitable manner. As one example, side wall portion **934** can be integrally formed as a part of shell section **906,** for example. In some cases, side wall portion **934** can be positioned such that end wall portion **932** extends radially outward from the side wall portion toward side wall portion **928** and partition wall portion **930** extends radially inward from along side wall portion **934.**

Additionally, side wall portion **934** can have an outer surface **938** that is dimensioned to receive mounting bead **212** of end **208** of flexible wall **204** such that a substantially fluid-tight seal can be formed therebetween. In some cases, a retaining ridge **940** can project radially outward from along the side wall portion **934** and can extend peripherally along at least a portion thereof, such as may assist in retaining end **208** of flexible wall **204** in abutting engagement on or along the side wall portion.

It will be appreciated that base section **904** and shell section **906** can be secured to one another in any suitable manner. In a preferred arrangement, the base and shell sections can be secured to one another in a manner suitable for retaining the shell section on or along the associated end member (e.g., lower structural component **LSC).** In the exemplary arrangement shown in FIGS. 8 and 9, base section **904** includes a plurality of holes **942** extending through base wall **908** adjacent outer peripheral edge **916.**

Side wall portion **934** can include an inner surface **944** dimensioned to receive outer surface **922** of side wall **910** of base section **904.** In some cases, distal end surface **920** of side wall **910** can be disposed in abutting engagement with a surface **946** of partition wall portion **930** and/or end wall portion **932.** Additionally, in some cases, shell section **902** can include a recess **948** (FIG. 9) extending into side wall portion **934** from along an end surface **950.** A plurality of securement features, such as threaded holes **952** can extend into side wall portion **934** from along end surface **950.** In a preferred arrangement, one or more of threaded holes **952** can be at least approximately aligned with one or more of holes **942** such that securement devices, such as a plurality of threaded fasteners **954** can be used to secure base section **904** and shell section **906** to one another. It will be appreciated, however, that other configurations and/or arrangements could alternately be used.

It will be appreciated that a gas spring and gas damper assembly in accordance with the subject matter of the present disclosure (e.g., assemblies **102** and/or **AS1)** can include any number of one or more additional features, components and/or devices. For example, gas spring and gas damper assembly **AS2** can, optionally, include a jounce bumper (not shown) supported on one of the end members and suitable for inhibiting direct contact between the end members and/or transferring axially-applied loads or forces between the end members. It will be appreciated that the jounce bumper, if included, can be of any suitable size, shape and/or construction, and can be secured on or along the associated end member in any suitable manner, such as has been described above in connection with FIG. 3, for example.

As described above, one or more of the end members of a gas spring and gas damper assembly in accordance with the subject matter of the present disclosure can include a damper volume, damper reservoir and/or other damping chamber that is separate from the spring chamber (e.g., spring chamber **202)** but that is capable of being placed in fluid communication with the spring chamber such that pressurized gas damping can be generated as a result of pressurized gas flow between the spring chamber and the volume, reservoir or other chamber of the one or more end members. In the arrangement shown in FIG. 8, for example, end member **900** includes a damper reservoir **956** that is at least partially formed by one or more walls and/or wall portions of the end member. In the arrangement shown in FIG. 8, for example, damper reservoir **956** is at least partially defined by inner surface **914** of base wall **908** and inner surface **924** of side wall **910.** Additionally, damper reservoir **956** is at least partially defined by surface **946** of partition wall portion **930** and/or end wall portion **932.** It will be appreciated, however, that other configurations and/or arrangements could alternately be used.

In some cases, it may be desirable to maintain a substantially fluid-tight interface between base section **904** and shell section **906** to inhibit or at least reduce pressurized gas loss from between the two sections. It will be appreciated that such a substantially fluid-tight interface can be achieved in any suitable manner, such as by providing one or more sealing elements **958** in sealing engagement between the sections of end member **900**. Additionally, or in the alternative, a flowed-material joint (not shown) could be formed in a suitable manner between the sections of end member **900.** It will be appreciated, however, that other configurations and/or constructions could alternately be used.

As indicated above, a gas spring and gas damper assembly in accordance with the subject matter of the present disclosure can include one or more elongated gas damping passages fluidically connected between the spring chamber and one or more gas damper reservoirs. In some cases, the one or more elongated gas damping passages can be at least partially formed by one or more lengths of tubular material that are connected in fluid communication between the spring chamber and a corresponding one or more pressurized gas damper reservoirs. Alternately, as shown in FIGS. 8 and 9, for example, at least a portion of an elongated gas damping passage can be provided that is internal to or otherwise at least partially defined by one or more walls or wall portions of an end member.

In the arrangement shown in FIGS. 8 and 9, for example, end member **900** includes an elongated gas damping passage **960** that is at least partially defined by at least one of base section **904** and shell section **906.** As one example, a groove or channel can be formed along the outer surface of the side wall of the base section that can cooperate with an inner surface of the side wall portion of the shell section to at least partially form an elongated gas damping passage. As another example, a groove or channel can be formed along the inner surface of the side wall portion of the shell section that can cooperate with an outer surface of the side wall of the base section to at least partially form an elongated gas damping passage. In the arrangement shown, a groove or channel **962** is formed along outer surface **922** of side wall **910** of base section **904,** and a groove or channel **964** is formed along inner surface **944** of side wall portion **928** of shell section **906.**

In an assembled condition of end member **900,** shell section **906** is received on base section **904** such that inner and outer surfaces **944** and **922** are disposed adjacent one another. In a preferred arrangement, a close fit between the inner and outer surfaces can be used to minimize or at least reduce the size of any gap that may exist between the inner and outer surfaces. In this manner, pressurized gas flow through the end member, other than through passage **960,** can be minimized or at least reduced. In some cases, one or more sealing elements **966** could be disposed between base section **904** and shell section **906** in a suitable manner, such as may substantially inhibit or at least further reduce the inadvertent pressurized gas transfer therebetween.

As discussed above, the elongated gas damping passage (e.g., passage **960)** will have an overall length (not represented) and a cross-sectional shape with a maximum cross-sectional dimension (e.g., reference dimension **DM** in FIG. 3), for example. In the arrangement shown in FIGS. 7-9, groove **962** of base section **904** and groove **964** of shell section **906** cooperate to form elongated gas damping passage **960.** It will be appreciated that the cross-sectional shape or profile of grooves **962** and **964** can be of any suitable form or configuration. In the arrangement shown, grooves **962** and **964** have an approximately semi-circular profile that results in passage **960** having an approximately circular cross-sectional shape. It will be appreciated, however, that other configurations and/or arrangements could alternately be used. Non-limiting examples of suitable cross-sectional shapes for the grooves that at least partially form an elongated gas damping passage (e.g., passage **960)** can include approximately circular, ovoid, elliptical, rectangular, square and/or other curved or polygonal shapes. In some cases, the cross-sectional shape may be substantially uniform along the length of the passage. In other cases, different sections or portions of the elongated gas damping passage can have different cross-sectional shapes.

Additionally, it will be appreciated that the one or more elongated gas damping passages (e.g., passage **960)** can be configured or otherwise arranged within the end member (e.g., end member **900)** in any suitable manner, such as by having one or more portions or sections that are linear, helical, curved, serpentine (axially and/or radially) or any combination of these and/or other configurations and/or arrangements. In some cases, performance benefits may be achieved by using a coiled or helical arrangement in comparison with other configurations. As such, elongated gas damping passage **960** is shown as including a plurality of loops that are disposed in a helical arrangement. It will be appreciated, however, that other configurations and/or arrangements could alternately be used.

Elongated gas damping passage **960** can be disposed in fluid communication with spring chamber **202** in any suitable manner, such as by way or an opening or port **968** extending through partition wall **930,** for example. Additionally, the elongated gas damping passage can be disposed in fluid communication with damping reservoir **956** in any suitable manner, such as by way of opening or port **970** extending through side wall **910,** for example. In some cases, one or more of base section **904** and/or shell section **906** can include one or more additional walls and/or wall portions that can at least partially define one or more additional features and/or chambers. As one example, base section **904** includes an interior wall portion **972** and a chamber wall portion **974** that together with shell section **906** at least partially define a chamber **976** disposed in fluid communication between port **968** and passage **960.** In some cases, a control device **CD1** can be at least partially housed within chamber **976** and connected in fluid communication between port **968** and passage **960.** Additionally, or in the alternative, a control device **CD2** can be disposed in fluid communication with passage **960** by way of port **970.** It will be appreciated that any suitable type, kind and/or combination of control devices can be used, such as one or more of control devices **500, 600** and/or **700,** such as have been described above, for example.

Generally, elongated gas damping passage **960** can be dimensioned such that pressurized gas flows into, out of and/or otherwise is displaced within the elongated gas damping passage or passages. As a result, such pressurized gas flow can generate pressurized gas damping of vibrations and/or other dynamic inputs acting on the overall assembly and/or system. In a preferred arrangement, the elongated gas damping passage can be configured such that such pressurized gas damping can be targeted to dissipate vibrations and/or other dynamic inputs having a particular, predetermined natural frequency or within a particular, predetermined range of frequencies, such as has been described above in detail.

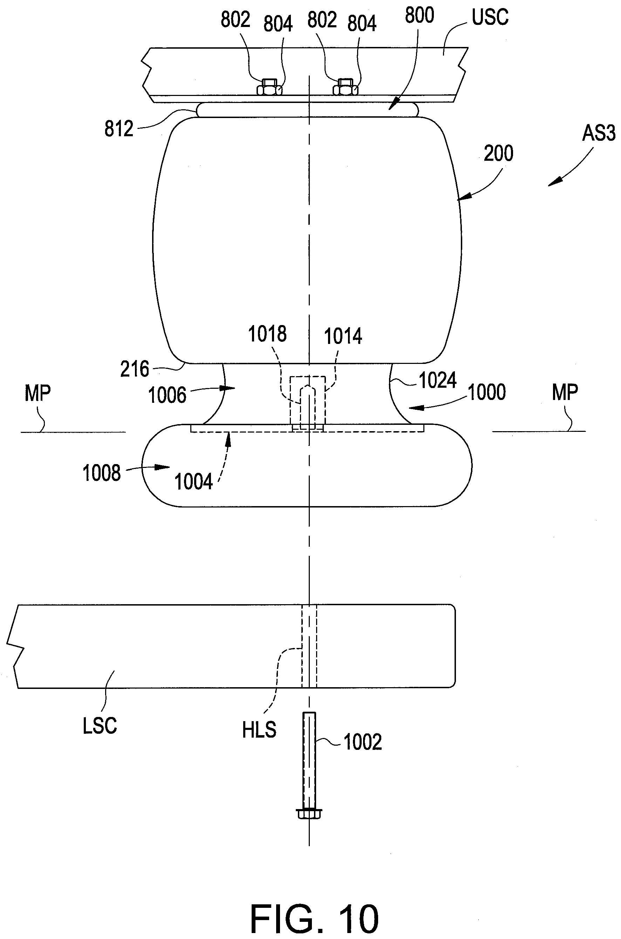

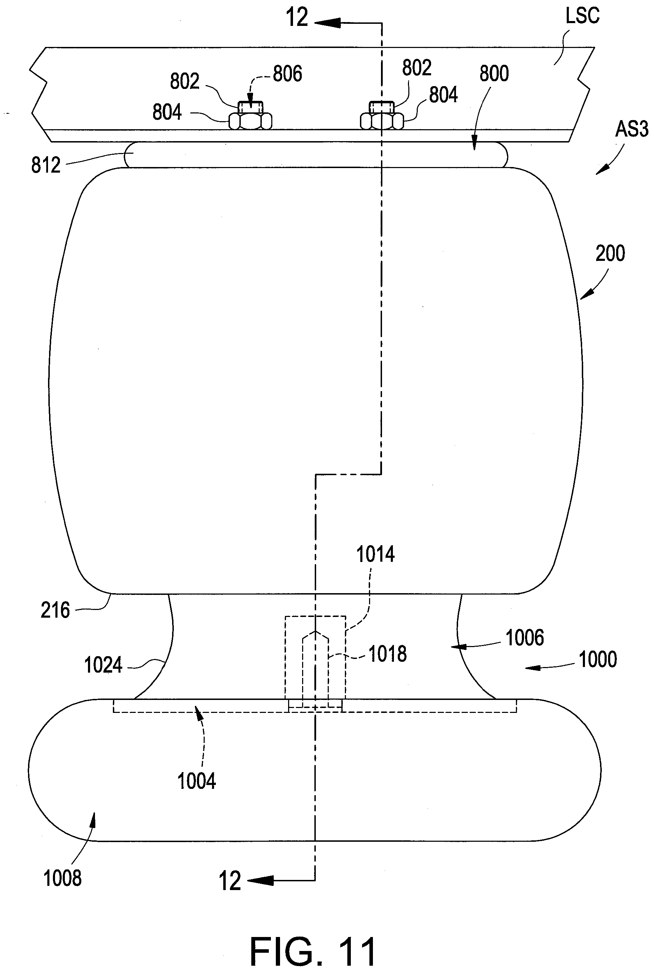

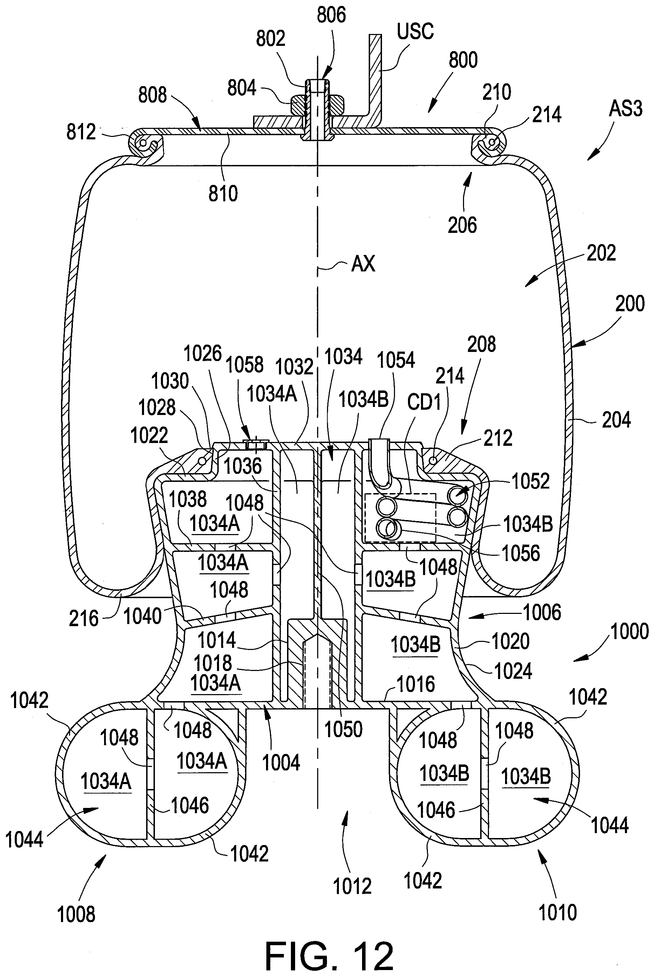

A further example of a gas spring and gas damper assembly **AS3** in accordance with the subject matter of the present disclosure, such as may be suitable for use as gas spring and gas damper assemblies **102,** for example, is shown in FIGS. 10-12. Gas spring and gas damper assembly **AS3** can have a longitudinally-extending axis **AX** and can include one or more end members, such as an end member **800,** such as has been described in detail above, and an end member **1000** that is spaced longitudinally from end member **800.** Flexible spring member **200,** such as has been described in detail above, can extend peripherally around axis **AX** and can be secured between the end members in a substantially fluid-tight manner such that spring chamber **202** (FIG. 12) is at least partially defined therebetween.

Gas spring and gas damper assembly **AS3** can be disposed between associated sprung and unsprung masses of an associated vehicle in any suitable manner. For example, one end member can be operatively connected to the associated sprung mass with the other end member disposed toward and operatively connected to the associated unsprung mass. As shown in FIGS. 10-12, for example, end member **800** can be secured on or along a first or upper structural component **USC,** such as associated vehicle body **BDY** in FIG. 1, for example, and can be secured thereon in any suitable manner, such as has been described above in detail. Accordingly, a further description end member **800** and the operative connection thereof to upper structural component **USC** is not repeated here. However, it is to be recognized and understood that the foregoing description of end member **800** as well as the features, components, construction and materials thereof is equally applicable to the arrangement shown in FIGS. 10-12.

Additionally, flexible spring member **200** has been described above in detail. Accordingly, a description of flexible spring member **200,** the operative connection thereof with end member **800** and the fluid communication between transfer passages **806** and spring chamber **202** are not repeated here. However, it is to be recognized and understood that the foregoing description of flexible spring member **200** as well as the features, components, construction and materials thereof is equally applicable to the arrangement shown in FIGS. 10-12.

End member assembly **1000** can be secured on or along a second or lower structural component **LSC,** such as an axle **AXL** in FIG. 1, for example, in any suitable manner. As one example, lower structural component **LSC** could include one or more mounting holes **HLS** extending therethrough. In such case, a threaded fastener **1002** could extend through one of mounting holes **HLS** and threadably engage end member **1000** or another component of the assembly to secure the end member on or along the lower structural component.

It will be appreciated that the end members and/or end member assemblies can be of any suitable type, kind, construction and/or configuration, and can be operatively connected or otherwise secured to the flexible spring member in any suitable manner. In the exemplary arrangement shown in FIGS. 10-12, for example, end member **1000** is of a type commonly referred to as a piston (or a roll-off piston), and can include a base wall (or base wall portion) **1004** that at least partially defines a mounting plane **MP** of the end member. A shell section **1006** can extend from along base wall **1004** in a direction toward end member **800.** Additionally, end member **1000** can include a pair of spaced-apart reservoir sections **1008** and **1010** that extend from along base wall **1004** in a direction opposite shell section **1006** such that a recess in the form of a channel **1012** is at least partially defined along base wall **1004** between reservoir sections **1008** and **1010.**

It will be appreciated that end member **1000** can be secured on or along an associated structural component (e.g., lower structural component **LSC)** in any suitable manner. For example, one or more securement features can be provided on or can be otherwise accessible from along base wall **1004,** such as may be suitable for securement of the base section to an associated structural component. As one example, a boss **1014** can project from along an inner surface **1016** of base wall **1004** in a direction toward end member **800.** The boss can include a passage **1018** with one or more helical threads or other securement features, such as may be suitable for receivingly engaging an associated securement device, such as threaded fastener **1002,** for example. In such case, threaded fastener **1002** can extend through one of mounting holes **HLS** in lower structural component **LSC** and threadably engage boss **1014** or another feature or component of end member **1000** to secure the end member on or along the lower structural component. It will be appreciated, however, that other configurations and/or constructions could alternately be used.

Shell section **1006** of end member **1000** can include a side wall (or side wall portion) **1020** that extends from along base wall **1004** toward an end wall (or end wall portion) **1022** that extends generally transverse to axis **AX.** It will be recognized that a wide variety of sizes, shapes, profiles and/or configurations can and have been used in forming end members of the type and kind referred to as pistons or roll-off pistons, such as end member **1000,** for example. As such, it will be appreciated that the wall portions of the end member (e.g., side wall portion **1020)** can be of any suitable shape, profile and/or configuration, such as may be useful to provide one or more desired performance characteristics, for example, and that the profile shown in FIGS. 10-12 is merely exemplary. Side wall portion **1020** of end member **1000** has an outer surface **1024** that abuttingly engages flexible spring member **200** such that rolling lobe **216** is formed along flexible wall **204.** As gas spring and gas damper assembly **AS3** is displaced between compressed and extended conditions, rolling lobe **216** can be displaced along outer surface **1024** in a generally conventional manner.

As indicated above, it will be appreciated that the one or more end members of the gas spring and gas damper assembly can be operatively connected or otherwise secured to the flexible spring member in any suitable manner. For example, shell section **1006** of end member **1000** can include a side wall portion **1026** that extends longitudinally-outwardly beyond end wall portion **1022,** and extends peripherally about axis **AX.** Side wall portion **1026** can have an outer surface **1028** that is dimensioned to receive mounting bead **212** of end **208** of flexible wall **204** such that a substantially fluid-tight seal can be formed therebetween. In some cases, a retaining ridge **1030** can project radially outward from along the side wall portion **1026** and can extend peripherally along at least a portion thereof, such as may assist in retaining end **208** of flexible wall **204** in abutting engagement on or along the side wall portion.

In some cases, a cover wall (or cover wall portion) **1032** can extend across and thereby form a closed end (not numbered) of end member **1000** generally opposite reservoir sections **1008** and **1010.** It will be appreciated that any suitable configuration and/or arrangement of walls and/or wall portions can be used. As one example, cover wall **1032** extends across a distal end (not numbered) of side wall portion **1026.** It will be appreciated, however, that other configurations and/or arrangements could alternately be used.

As indicated above, a gas spring and gas damper assembly in accordance with the subject matter of the present disclosure can include or be otherwise associated with at least one additional volume, reservoir and/or other chamber that is dissociated or otherwise fluidically distinguishable from the spring chamber. It will be appreciated that any combination of one or more volumes, reservoirs and/or other chambers that are internal and/or external to the gas spring and gas damper assembly can be used. For example, in some cases, one or more end members of the gas spring and gas damper assembly can at least partially define the spring chamber and can also at least partially define an additional volume, reservoir or chamber that is internal to the gas spring and gas damper assembly. It will be appreciated, however, that such one or more end members can be of any suitable type, kind, configuration and/or construction.

As one example, end member **1000** includes a damper reservoir **1034** that is at least partially defined by base wall portion **1004,** side wall portion **1020,** end wall portion **1022,** side wall portion **1026** and/or cover wall portion **1032.** In some cases, reservoir sections **1008** can **1010** can also be included in fluid communication with damper reservoir **1034,** such as will be described hereinafter. Additionally, end member **1000** can include one or more additional walls or wall portions in any suitable configuration and/or combination. For example, end member **1000** can, optionally, include a central support wall (or wall portion) **1036** that can extend between base wall **1004** and cover wall **1032,** such as to act as a support column, for example. End member **1000** can also, optionally, include one or more connector walls (or wall portions) **1038** and **1040** that extend between and operatively interconnect central support wall portion **1036** and side wall portion **1020,** such as by extending radially therebetween.

Reservoir sections **1008** and **1010** are configured to straddle opposing sides of an associated structural component when mounted thereto. Reservoir sections **1008** and **1010** are formed from reservoir walls (or wall portions) **1042** that at least partially define reservoir extension volumes **1044.** In some cases, end member **1000** can include support walls (or wall portions) **1046** that extend across one of the reservoir extension volumes and operatively interconnect portions of reservoir walls **1042** for a given reservoir section. It will be appreciated, however, that a wide variety of other configurations and/or arrangements of the end member sections could alternately be used to provide an end member with an increased reservoir volume for a given application. Additionally, end member **1000** can include a plurality of openings or ports **1048** that extend through wall portions **1004, 1036, 1038, 1040** and/or **1046** to permit fluid communication between the various chambers of damper reservoir **1034.**

In some cases, end member **1000** can also include a partition wall **1050** that extends across and fluidically isolates damper reservoir **1034** into two or more damper reservoir portions. In the arrangement shown in FIG. 12, for example, partition wall separates damper reservoir **1034** into two substantially equal-sized damper reservoir portions that are formed by a plurality of reservoir and extension volume chambers **1034A** and **1034B.** It will be appreciated that chambers **1034A** are disposed in fluid communication with one another and ports **1048** that are respectively associated therewith are preferably sized to permit chamber **1034A** to act as a substantially contiguous volume. Similarly, chambers **1034B** are disposed in fluid communication with one another and ports **1048** that are respectively associated therewith are preferably sized to permit chamber **1034B** to act as a substantially contiguous volume. In this manner, two damper reservoirs **1034A** and **1034B** can be effectively provided in end member **1000.**

As indicated above, a gas spring and gas damper assembly in accordance with the subject matter of the present disclosure can include one or more elongated gas damping passages fluidically connected between the spring chamber and one or more gas damper reservoirs. Generally, the one or more elongated gas damping passages can be dimensioned such that pressurized gas flows into, out of and/or otherwise is displaced within the elongated gas damping passage or passages. As a result, such pressurized gas flow can generate pressurized gas damping of vibrations and/or other dynamic inputs acting on the overall assembly and/or system. In a preferred arrangement, such pressurized gas damping can be configured for or otherwise targeted to dissipate vibrations and/or other dynamic inputs having a particular, predetermined natural frequency or within a particular, predetermined range of frequencies.

It will be appreciated that the one or more elongated gas damping passages can provided in any suitable manner and through the use of any suitable combination of one or more features, elements and/or components. For example, gas spring and gas damper assembly **AS3** is shown in FIG. 12 as including an elongated gas damping passage **1052** that is at least substantially-entirely disposed within gas damper reservoir **1034B,** and extends between a passage end **1054** disposed in fluid communication with spring chamber **202** and a passage end **1056** disposed in fluid communication with gas damper reservoir **1034B.** The detailed description presented above of elongated gas damping passages **324** and **444** as well as the construction, connections and operation thereof are equally applicable to passage **1052** in FIG. 12. It will be appreciated, however, that passage **1052** can be operative to generate pressurized gas damping of vibrations at a first predetermined frequency or across a first predetermined range of frequencies, such as has been discussed above in detail.

Additionally, gas spring and gas damper assembly **AS3** can, optionally, include one or more flow control systems that are operatively connected between the spring chamber and one of the one or more pressurized gas volumes, pressurized gas reservoirs and/or other pressurized gas chambers. For example, a control device **CD1** can be at least partially housed within chamber **1034B** and connected in fluid communication between passage end **1054** and passage end **1056.** It will be appreciated that any suitable type, kind and/or combination of control devices can be used, such as one or more of control devices **500, 600** and/or **700,** such as have been described above, for example. If provided, control device **CD1** can be operative to generate pressurized gas damping of vibrations at a second predetermined frequency or across a second predetermined range of frequencies that is different form the first frequency or frequency range, such as has been discussed above in detail.

Furthermore, or as an alternative to control device **CD1,** gas spring and gas damper assembly **AS3** can, optionally, include one or more control devices operatively associated with damper reservoir **1034A.** In the arrangement shown, for example, a control device in the form of a throttle element or port **1058** can extend through cover wall portion **1032** such that pressurized gas transfer can occur between spring chamber **202** and damper reservoir **1034A.** Depending upon the size, shape and/or configuration of port **1058,** pressurized gas damping of vibrations at a second (or third) predetermined frequency or across a second (or third) predetermined range of frequencies that differ from the first frequency or frequency range can be provided.

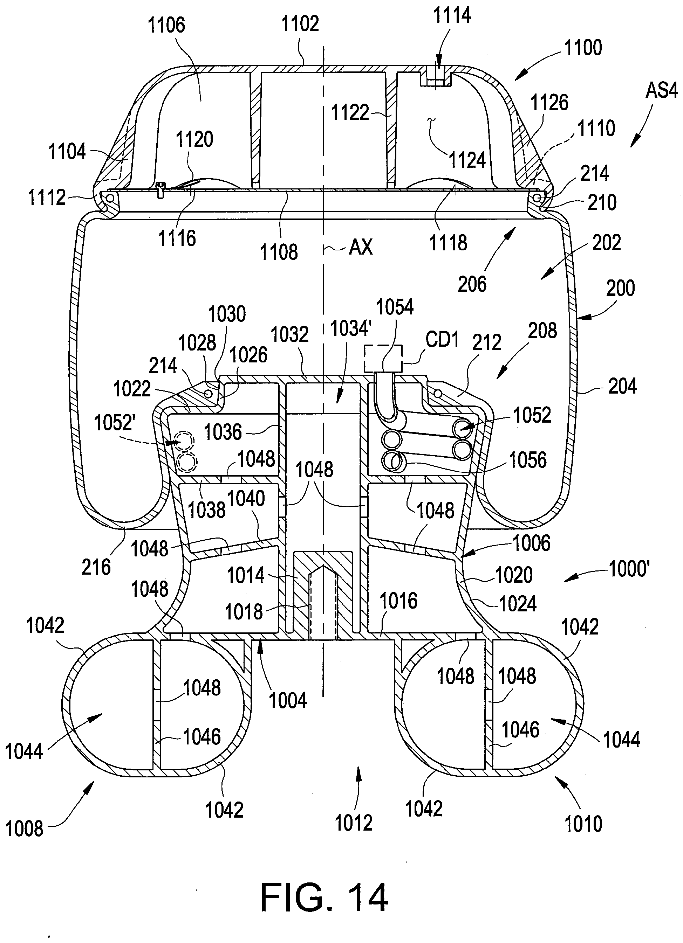

Still another example of a gas spring and gas damper assembly **AS4** in accordance with the subject matter of the present disclosure, such as may be suitable for use as gas spring and gas damper assemblies **102,** for example, is shown in FIGS. 13 and 14. Gas spring and gas damper assembly **AS4** can have a longitudinally-extending axis **AX** and can include one or more end members, such as an end member **1100** and an end member **1000'** that is spaced longitudinally from end member **1100.** It will be appreciated that end member **1000'** is substantially similar to end member **1000** shown and described herein in connection with FIGS. 10-12. Additionally, flexible spring member **200** can extend peripherally around axis **AX** and can be secured between the end members in a substantially fluid-tight manner such that spring chamber **202** (FIG. 14) is at least partially defined therebetween.

Gas spring and gas damper assembly **AS4** can be disposed between associated sprung and unsprung masses of an associated vehicle in any suitable manner, such as has been described above in connection with end members **300, 400, 800, 900** and/or **1000.** As such, a further description of the operative connection of end members **1100** and **1000'** to upper and lower structural components **USC** and **LSC** is not repeated here. However, it is to be recognized and understood that the foregoing descriptions as well as the features, components, construction and materials thereof are equally applicable to the arrangement shown in FIGS. 13 and 14.

Additionally, flexible spring member **200** has been described above in detail. Accordingly, a description of flexible spring member **200** is not repeated here. However, it is to be recognized and understood that the foregoing description of flexible spring member as well as the features, components, construction and materials thereof is equally applicable to the arrangement shown in FIGS. 13 and 14.

End member **1000'** differs from end member **1000** that is described above in that partition wall **1050** of end member **1000** is omitted from end member **1000'.** As such, damper reservoir **1034'** of end member **1000'** is not separated into damper reservoir portions (i.e., damper reservoir portions **1034A** and **1034B)** as was described in connection with end member **1000.** As such, all the chambers of damper reservoir **1034'** as well as reservoir extension volumes **1044'** are disposed in fluid communication with one another. Additionally, in a preferred arrangement, ports **1048** are preferably of sufficient size, shape and/or configuration to permit the chambers of damper reservoir **1034'** to form a substantially contiguous volume.

As indicated above, a gas spring and gas damper assembly in accordance with the subject matter of the present disclosure can include one or more elongated gas damping passages fluidically connected between the spring chamber and one or more gas damper reservoirs. Generally, the one or more elongated gas damping passages can be dimensioned such that pressurized gas flows into, out of and/or otherwise is displaced within the elongated gas damping passage or passages. As a result, such pressurized gas flow can generate pressurized gas damping of vibrations and/or other dynamic inputs acting on the overall assembly and/or system. In a preferred arrangement, such pressurized gas damping can be configured for or otherwise targeted to dissipate vibrations and/or other dynamic inputs having a particular, predetermined natural frequency or within a particular, predetermined range of frequencies.

It will be appreciated that the one or more elongated gas damping passages can be provided in any suitable manner and through the use of any suitable combination of one or more features, elements and/or components. For example, gas spring and gas damper assembly **AS4** is shown in FIG. 14 as including an elongated gas damping passage **1052** that is at least substantially-entirely disposed within gas damper reservoir **1034',** and extends between a passage end **1054** disposed in fluid communication with spring chamber **202** and a passage end **1056** disposed in fluid communication with gas damper reservoir **1034'.** The detailed description presented above of elongated gas damping passages **324** and **444** as well as the construction, connections and operation thereof are equally applicable to passage **1052** in FIG. 14. It will be appreciated, however, that passage **1054** can be operative to generate pressurized gas damping of vibrations at a first predetermined frequency or across a first predetermined range of frequencies, such as has been discussed above in detail. Additionally, in that gas damper reservoir **1034'** is greater in size relative to gas damper reservoir **1034** in FIG. 12, an elongated gas damping passage **1052'** can alternately be used that includes one or more coils or loops that extend through a larger radius or have a larger diameter than the corresponding coils or loops of passage **1052.** Furthermore, in that all of the chambers of gas damper reservoir **1034'** are disposed in fluid communication with passage **1052,** port **1058** of end member **1000** can, optionally, be omitted and is not shown in FIG. 14.

Gas spring and gas damper assembly **AS4** can, optionally, include one or more flow control systems that are operatively connected between the spring chamber and one of the one or more pressurized gas volumes, pressurized gas reservoirs and/or other pressurized gas chambers. For example, a control device **CD1** can be connected in fluid communication along passage **1052 or 1052',** such as along passage end **1054,** along passage end **1056** and/or in an intermediate position between ends **1054** and **1056.** It will be appreciated that any suitable type, kind and/or combination of control devices can be used, such as one or more of control devices **500, 600** and/or **700,** such as have been described above, for example. If provided, control device **CD1** can be operative to generate pressurized gas damping of vibrations at a second predetermined frequency or across a second predetermined range of frequencies that is different form the first frequency or frequency range, such as has been discussed above in detail.

Furthermore, or as an alternative to control device **CD1,** gas spring and gas damper assembly **AS4** can, optionally, include a second gas damping reservoir that is at least partially formed by end member **1100.** It will be appreciated that any suitable configuration, construction and/or arrangement of components can be used. As one example, end member **1100** is shown in FIGS. 13 and 14 as including an end wall (or wall portion) **1102** and a side wall (or wall portion) **1104** that extends axially from along end wall **1102** in a direction toward end member **1000'.** End wall **1102** and side wall **1104** together at least partially define a reservoir or chamber **1106** within end member **1100.** A partition wall **1108** can extend across the end member and can be supported along a distal end of side wall **1104** to further define gas damper reservoir **1106.** In some cases, side wall **1104** can terminate at or along an end wall portion **1110** and, if provided, partition wall **1108** can be supported on end member **1100** on or along end wall portion **1110.**

End member **1100** can be secured on or along end **206** of flexible wall **204** in any suitable manner. As one example, an outer peripheral wall portion **1112** can be crimped or otherwise deformed around at least a portion of mounting bead **210** such that a substantially fluid-tight seal is formed therebetween. In the arrangement shown, such a configuration can also capture and at least partially retain partition wall **1108** on or along side wall **1104** and/or end wall portion **1110,** such as by capturing the outer peripheral edge of the partition wall between mounting bead **210** and end wall portion **1110,** for example. It will be appreciated, however, that other configurations and/or arrangements could alternately be used.

Gas spring and gas damper assembly **AS4** can be in fluid communication with a suitable pressurized gas system (e.g., pressurized gas system **104**) in any suitable manner. As one example, end member **1100** can include a pressurized gas transfer passage **1114** extending through end wall **1102** in fluid communication with at least damping reservoir **1106.** Additionally, it will be appreciated that damping reservoir **1106** can be disposed in fluid communication with spring chamber **202** in any suitable manner, such as by way of one or more ports or passages **1116** and/or **1118** that extend through partition wall **1108,** for example. As discussed above, gas spring and gas damper assembly **AS4** can, optionally, include one or more flow control systems that are operatively connected between the spring chamber and one of the one or more pressurized gas volumes, pressurized gas reservoirs and/or other pressurized gas chambers. For example, a control device **1120,** which is shown as taking the form of a flap valve, can be disposed in fluid communication along one or more of passages **1116** and/or **1118.** In such cases, the passages and control device can be cooperative to generate pressurized gas damping of vibrations at a predetermined frequency or across a predetermined range of frequencies. In a preferred arrangement, the predetermined frequency or frequency range will be different form the first frequency or frequency range associated with elongated gas damping passage **1052** and/or **1052',** such as has been discussed above in detail.

It will be appreciated that end member **1100** can include any suitable number of one or more additional features, components and/or elements. For example, a central support wall **1122** can extend from along end wall **1102** toward partition wall **1108** and can, in some cases abuttingly engage the partition wall, such as may substantially inhibit deflection of the partition wall into damping reservoir **1106.** In some cases, end member **1100** can include one or more inner support walls **1124,** such as may extend between and operatively interconnect central support wall **1122** and side wall **1104,** for example. Additionally, or in the alternative, end member **1100** can include one or more outer support walls **1126,** such as may extend between and operatively interconnect side wall **1104** and end wall portion **1110,** for example. In some cases, one or more gaps or spaces (not numbered) can be provided between partition wall **1108** and one or more of inner support walls **1124** and/or central support wall **1122,** such as may permit different sections or chambers of damping reservoir **1106** for function as a substantially contiguous volume.

As used herein with reference to certain features, elements, components and/or structures, numerical ordinals (e.g., first, second, third, fourth, etc.) may be used to denote different singles of a plurality or otherwise identify certain features, elements, components and/or structures, and do not imply any order or sequence unless specifically defined by the claim language. Additionally, the terms "transverse," and the like, are to be broadly interpreted. As such, the terms "transverse," and the like, can include a wide range of relative angular orientations that include, but are not limited to, an approximately perpendicular angular orientation. Also, the terms "circumferential," "circumferentially," and the like, are to be broadly interpreted and can include, but are not limited to circular shapes and/or configurations. In this regard, the terms "circumferential," "circumferentially," and the like, can be synonymous with terms such as "peripheral," "peripherally," and the like.

Furthermore, the phrase "flowed-material joint" and the like, if used herein, are to be interpreted to include any joint or connection in which a liquid or otherwise flowable material (e.g., a melted metal or combination of melted metals) is deposited or otherwise presented between adjacent component parts and operative to form a fixed and substantially fluid-tight connection therebetween. Examples of processes that can be used to form such a flowed-material joint include, without limitation, welding processes, brazing processes and soldering processes. In such cases, one or more metal materials and/or alloys can be used to form such a flowed-material joint, in addition to any material from the component parts themselves. Another example of a process that can be used to form a flowed-material joint includes applying, depositing or otherwise presenting an adhesive between adjacent component parts that is operative to form a fixed and substantially fluid-tight connection therebetween. In such case, it will be appreciated that any suitable adhesive material or combination of materials can be used, such as one-part and/or two-part epoxies, for example.

Further still, the term "gas" is used herein to broadly refer to any gaseous or vaporous fluid. Most commonly, air is used as the working medium of gas spring devices, such as those described herein, as well as suspension systems and other components thereof. However, it will be understood that any suitable gaseous fluid could alternately be used.

## Claims

1. A gas spring and gas damper assembly (AS2) comprising:
a first end member (900) including a first end member wall (910) and a second end member wall (928);
a second end member (800) spaced longitudinally from said first end member (900) such that a longitudinal axis (AX) is formed therebetween;
a flexible spring member (200) secured between said first and second end members (800, 900) such that a spring chamber (202) is at least partially defined by said flexible spring member (200) between said first and second end members (800, 900);
a first damper reservoir (956) having a substantially-fixed volume disposed within said first end member (900); and,
an elongated gas damping passage (960) at least partially defined by said first end member wall (910) and extending peripherally about said axis (AX) to form at least a portion of at least one helical coil, said elongated damping passage (960) fluidically connected between said spring chamber (202) and said first damper reservoir (956) with a first passage port (968) extending through said first end member wall (910) and placing said elongated gas damping passage (960) in fluid communication with said spring chamber (202) and a second passage port (970) extending through said first end member wall (910) and placing said elongated gas damping passage (960) in fluid communication with said first damper reservoir (956), said elongated gas damping passage (960) operative to generate pressurized gas damping of vibrations across a predetermined range of frequencies,
wherein said second end member wall (928) is cooperative with said first end member wall (910) to at least partially define said elongated gas damping passage (960) therebetween,
**characterized in that**
at least one of said first and second end member walls (910; 928) includes an elongated helical groove (962; 964) extending therealong that at least partially defines said elongated gas damping passage (960).

2. A gas spring and gas damper assembly (AS2) according to claim 1, wherein said elongated gas damping passage (960) has a passage length and a passage cross-sectional dimension with a ratio of said passage length to said passage cross-sectional dimension of at least 10:1.

3. A gas spring and gas damper assembly (AS2) according to claim 1 or claim 2, wherein said elongated gas damping passage (960) has a passage length and a passage cross-sectional dimension with a ratio of said passage length to said passage cross-sectional dimension of at least 20:1.

4. A gas spring and gas damper assembly (AS2) according to any one of claims 1-3, wherein said elongated gas damping passage (960) has a passage length and a passage cross-sectional dimension with a ratio of said passage length to said passage cross-sectional dimension of at least 50:1.

5. A gas spring and gas damper assembly (AS2) according to any one of claims 1-4, further comprising a control device (CD1; CD2) disposed in fluid communication along said elongated gas damping passage (960) and in series therewith, said control device (CD1; CD2) operative to alter pressurized gas flow through said elongated gas damping passage (960) under one or more conditions of use.

6. A gas spring and gas damper assembly (AS2) according to claim 5, wherein said control device (CD1; CD2) is operative to generate pressurized gas damping of vibrations across a second predetermined range of frequencies.

7. A suspension system (100) comprising:
a pressurized gas system (104); and,
at least one gas spring and gas damper assembly (AS2) according any one of claims 1-6 in fluid communication with said pressurized gas system (104).

8. A method of manufacturing a gas spring and gas damper assembly (AS2) according to any one of claims 1-6, said method comprising:
providing a flexible spring member (200) with a longitudinal axis (AX) and a flexible wall (204) extending peripherally about said longitudinal axis (AX) to at least partially define a spring chamber (202);
providing a first end member (900) including an end member wall (910) and a first damper reservoir (956) having a substantially fixed volume disposed within said first end member (900); and
providing an elongated gas damping passage (960) at least partially within said end member wall (910) and extending peripherally about said axis (AX) to form at least a portion of at least one helical coil and connecting said elongated gas damping passage (960) in fluid communication between said spring chamber (202) and said first damper reservoir (956) to generate pressurized gas damping of vibrations across a predetermined range of frequencies with a first passage port (968) of the elongated gas damping passage (960) extending through said end member wall (910) and placing said elongated gas damping passage (960) in fluid communication with said spring chamber (202) and a second passage port (970) of said elongated gas damping passage (960) extending through said end member wall (910) and placing said elongated gas damping passage (960) in fluid communication with said first damper reservoir (956);
wherein providing said first end member (900) includes providing a first end member wall (910) and a second end member wall (928) that is cooperative with said first end member wall (910) to at least partially define said elongated gas damping passage (960) therebetween,
**characterized in that**
at least one of said first and second end member walls (910; 928) includes an elongated helical groove (962; 964) extending therealong that at least partially defines said elongated gas damping passage (960).

9. A method according to claim 8, wherein providing said first end member wall (910) includes providing an outer surface (922) along said first end member wall (910) with a groove (962) formed along said outer surface (922) at least partially defining said elongated gas damping passage (960).

10. A method according to claim 8 or claim 9, wherein providing said second end member wall (928) includes providing an inner surface (944) along said second end member wall (928) with a groove (964) formed along said inner surface (944) at least partially defining said elongated gas damping passage (960).

## Patentansprüche

1. Gasfeder- und Gasdämpferanordnung (AS2), umfassend:
ein erstes Endelement (900), das eine erste Endelementwand (910) und eine zweite Endelementwand (928) einschließt;
ein zweites Endelement (800), das von dem ersten Endelement (900) derart beabstandet ist, dass eine Längsachse (AX) dazwischen ausgebildet ist;
ein flexibles Federelement (200), das zwischen dem ersten und dem zweiten Endelement (800, 900) derart befestigt ist, dass eine Federkammer (202) mindestens teilweise durch das flexible Federelement (200) zwischen dem ersten und dem zweiten Endelement (800, 900) definiert ist;
ein erstes Dämpferreservoir (956), das ein im Wesentlichen festes Volumen aufweist, das innerhalb des ersten Endelements (900) eingerichtet ist; und
einen länglichen Gasdämpfungsdurchgang (960), der mindestens teilweise durch die erste Endelementwand (910) definiert ist und sich in Umfangsrichtung um die Achse (AX) herum erstreckt, um mindestens einen Abschnitt mindestens einer schraubenförmigen Windung auszubilden, wobei der längliche Dämpfungsdurchgang (960) zwischen der Federkammer (202) und dem ersten Dämpferreservoir (956) fluidisch verbunden ist, mit einer ersten Durchgangsöffnung (968), die sich durch die erste Endelementwand (910) erstreckt und den länglichen Gasdämpfungsdurchgang (960) in Fluidverbindung mit der Federkammer (202) bringt, und einer zweiten Durchgangsöffnung (970), die sich durch die erste Endelementwand (910) erstreckt und den länglichen Gasdämpfungsdurchgang (960) in Fluidverbindung mit dem ersten Dämpferreservoir (956) bringt, wobei der längliche Gasdämpfungsdurchgang (960) betriebsfähig ist, um eine Druckgasdämpfung von Vibrationen über einen vorbestimmten Frequenzbereich hinweg zu erzeugen, wobei die zweite Endelementwand (928) mit der ersten Endelementwand (910) zusammenwirkt, um mindestens teilweise den länglichen Gasdämpfungsdurchgang (960) dazwischen zu definieren,
**dadurch gekennzeichnet, dass**
mindestens eine der ersten und der zweiten Endelementwand (910; 928) eine längliche schraubenförmige Rille (962; 964) einschließt, die sich daran entlang erstreckt und die mindestens teilweise den länglichen Gasdämpfungsdurchgang (960) definiert.

2. Gasfeder- und Gasdämpferanordnung (AS2) nach Anspruch 1, wobei der längliche Gasdämpfungsdurchgang (960) eine Durchgangslänge und eine Durchgangsquerschnittsabmessung mit einem Verhältnis der Durchgangslänge zu der Durchgangsquerschnittsabmessung von mindestens 10 : 1 aufweist.

3. Gasfeder- und Gasdämpferanordnung (AS2) nach Anspruch 1 oder 2, wobei der längliche Gasdämpfungsdurchgang (960) eine Durchgangslänge und eine Durchgangsquerschnittsabmessung mit einem Verhältnis der Durchgangslänge zu der Durchgangsquerschnittsabmessung von mindestens 20 : 1 aufweist.

4. Gasfeder- und Gasdämpferanordnung (AS2) nach einem der Ansprüche 1 bis 3, wobei der längliche Gasdämpfungsdurchgang (960) eine Durchgangslänge und eine Durchgangsquerschnittsabmessung mit einem Verhältnis der Durchgangslänge zu der Durchgangsquerschnittsabmessung von mindestens 50 : 1 aufweist.

5. Gasfeder- und Gasdämpferanordnung (AS2) nach einem der Ansprüche 1 bis 4, ferner umfassend eine Steuervorrichtung (CD1; CD2), die in Fluidverbindung entlang des länglichen Gasdämpfungsdurchgangs (960) und in Reihe damit eingerichtet ist, wobei die Steuervorrichtung (CD1; CD2) betriebsfähig ist, um den Druckgasstrom durch den länglichen Gasdämpfungsdurchlass (960) unter einer oder mehreren Nutzungsbedingungen zu verändern.

6. Gasfeder- und Gasdämpferanordnung (AS2) nach Anspruch 5, wobei die Steuervorrichtung (CD1; CD2) betriebsfähig ist, um eine Druckgasdämpfung von Vibrationen über einen zweiten vorbestimmten Frequenzbereich hinweg zu erzeugen.

7. Aufhängungssystem (100), umfassend:
ein Druckgassystem (104); und
mindestens eine Gasfeder- und Gasdämpferanordnung (AS2) nach einem der Ansprüche 1 bis 6, die mit dem Druckgassystem (104) in Fluidverbindung steht.

8. Verfahren zum Herstellen einer Gasfeder- und Gasdämpferanordnung (AS2) nach einem der Ansprüche 1 bis 6, das Verfahren umfassend:
Bereitstellen eines flexiblen Federelements (200) mit einer Längsachse (AX) und einer flexiblen Wand (204), die sich in Umfangsrichtung um die Längsachse (AX) herum erstreckt, um mindestens teilweise eine Federkammer (202) zu definieren;
Bereitstellen eines ersten Endelements (900), das eine Endelementwand (910) und ein erstes Dämpferreservoir (956) einschließt, das ein im Wesentlichen festes Volumen aufweist, das innerhalb des ersten Endelements (900) eingerichtet ist; und
Bereitstellen eines länglichen Gasdämpfungsdurchgangs (960) mindestens teilweise innerhalb der Endelementwand (910), der sich in Umfangsrichtung um die Achse (AX) herum erstreckt, um mindestens einen Abschnitt mindestens einer schraubenförmigen Windung auszubilden, und Verbinden des länglichen Gasdämpfungsdurchgangs (960) in Fluidverbindung zwischen der Federkammer (202) und dem ersten Dämpferreservoir (956), um eine Druckgasdämpfung von Vibrationen über einen vorbestimmten Frequenzbereich hinweg zu erzeugen, mit einer ersten Durchgangsöffnung (968) des länglichen Gasdämpfungsdurchgangs (960), die sich durch die Endelementwand (910) erstreckt und den länglichen Gasdämpfungsdurchgang (960) in Fluidverbindung mit der Federkammer (202) bringt, und einer zweiten Durchgangsöffnung (970) des länglichen Gasdämpfungsdurchgangs (960), die sich durch die Endelementwand (910) erstreckt und den länglichen Gasdämpfungsdurchgang (960) in Fluidverbindung mit dem ersten Dämpferreservoir (956) bringt;
wobei das Bereitstellen des ersten Endelements (900) das Bereitstellen einer ersten Endelementwand (910) und einer zweiten Endelementwand (928) einschließt, die mit der ersten Endelementwand (910) zusammenwirkt, um mindestens teilweise den länglichen Gasdämpfungsdurchgang (960) dazwischen zu definieren,
**dadurch gekennzeichnet, dass**
mindestens eine der ersten und der zweiten Endelementwand (910; 928) eine längliche schraubenförmige Rille (962; 964) einschließt, die sich daran entlang erstreckt und die mindestens teilweise den länglichen Gasdämpfungsdurchgang (960) definiert.

9. Verfahren nach Anspruch 8, wobei das Bereitstellen der ersten Endelementwand (910) das Bereitstellen einer Außenoberfläche (922) entlang der ersten Endelementwand (910) mit einer Rille (962) einschließt, die entlang der Außenoberfläche (922) ausgebildet ist und mindestens teilweise den länglichen Gasdämpfungsdurchgang (960) definiert.

10. Verfahren nach Anspruch 8 oder 9, wobei das Bereitstellen der zweiten Endelementwand (928) das Bereitstellen einer Innenoberfläche (944) entlang der zweiten Endelementwand (928) mit einer Rille (964) einschließt, die entlang der Innenoberfläche (944) ausgebildet ist und mindestens teilweise den länglichen Gasdämpfungsdurchgang (960) definiert.

## Revendications

1. Ensemble ressort à gaz et amortisseur à gaz (AS2) comprenant :
un premier élément d'extrémité (900) comportant une première paroi d'élément d'extrémité (910) et une seconde paroi d'élément d'extrémité (928) ;
un second élément d'extrémité (800) espacé longitudinalement dudit premier élément d'extrémité (900) de telle sorte qu'un axe longitudinal (AX) est formé entre eux ;
un élément ressort flexible (200) fixé entre lesdits premier et second éléments d'extrémité (800, 900) de telle sorte qu'une chambre de ressort (202) est au moins partiellement définie par ledit élément ressort flexible (200) entre lesdits premier et second éléments d'extrémité (800, 900) ;
un premier réservoir amortisseur (956) ayant un volume sensiblement fixe disposé au sein dudit premier élément d'extrémité (900) ; et,
un passage allongé d'amortissement à gaz (960) au moins partiellement défini par ladite première paroi d'élément d'extrémité (910) et s'étendant de façon périphérique autour dudit axe (AX) pour former au moins une partie d'au moins un serpentin hélicoïdal, ledit passage allongé d'amortissement (960) étant raccordé fluidiquement entre ladite chambre de ressort (202) et ledit premier réservoir amortisseur (956) avec un premier orifice de passage (968) s'étendant à travers ladite première paroi d'élément d'extrémité (910) et plaçant ledit passage allongé d'amortissement à gaz (960) en communication fluidique avec ladite chambre de ressort (202) et un second orifice de passage (970) s'étendant à travers ladite première paroi d'élément d'extrémité (910) et plaçant ledit passage allongé d'amortissement à gaz (960) en communication fluidique avec ledit premier réservoir amortisseur (956), ledit passage allongé d'amortissement à gaz (960) étant fonctionnel pour générer un amortissement par gaz sous pression des vibrations à travers une plage prédéterminée de fréquences, dans lequel ladite seconde paroi d'élément d'extrémité (928) coopère avec ladite première paroi d'élément d'extrémité (910) pour définir au moins partiellement ledit passage allongé d'amortissement à gaz (960) entre elles,
**caractérisé en ce que**
au moins l'une desdites première et seconde parois d'élément d'extrémité (910 ; 928) comporte une rainure hélicoïdale allongée (962 ; 964) s'étendant le long de celles-ci, qui définit au moins partiellement ledit passage allongé d'amortissement à gaz (960).

2. Ensemble ressort à gaz et amortisseur à gaz (AS2) selon la revendication 1, dans lequel ledit passage allongé d'amortissement à gaz (960) a une longueur de passage et une dimension en coupe transversale de passage avec un rapport de ladite longueur de passage à ladite dimension en coupe transversale de passage d'au moins 10:1.

3. Ensemble ressort à gaz et amortisseur à gaz (AS2) selon la revendication 1 ou la revendication 2, dans lequel ledit passage allongé d'amortissement à gaz (960) a une longueur de passage et une dimension en coupe transversale de passage avec un rapport de ladite longueur de passage à ladite dimension en coupe transversale de passage d'au moins 20:1.

4. Ensemble ressort à gaz et amortisseur à gaz (AS2) selon l'une quelconque des revendications 1 à 3, dans lequel ledit passage allongé d'amortissement à gaz (960) a une longueur de passage et une dimension en coupe transversale de passage avec un rapport de ladite longueur de passage à ladite dimension en coupe transversale de passage d'au moins 50:1.

5. Ensemble ressort à gaz et amortisseur à gaz (AS2) selon l'une quelconque des revendications 1 à 4, comprenant en outre un dispositif de commande (CD1 ; CD2) disposé en communication fluidique le long dudit passage allongé d'amortissement à gaz (960) et en série avec celui-ci, ledit dispositif de commande (CD1 ; CD2) étant fonctionnel pour modifier un écoulement de gaz sous pression à travers ledit passage allongé d'amortissement à gaz (960) dans une ou plusieurs conditions d'utilisation.

6. Ensemble ressort à gaz et amortisseur à gaz (AS2) selon la revendication 5, dans lequel ledit dispositif de commande (CD1 ; CD2) est fonctionnel pour générer un amortissement par gaz sous pression des vibrations à travers une seconde plage prédéterminée de fréquences.

7. Système de suspension (100) comprenant :
un système de gaz sous pression (104) ; et,
au moins un ensemble ressort à gaz et amortisseur à gaz (AS2) selon l'une quelconque des revendications 1 à 6 en communication fluidique avec ledit système de gaz sous pression (104).

8. Procédé de fabrication d'un ensemble ressort à gaz et amortisseur à gaz (AS2) selon l'une quelconque des revendications 1 à 6, ledit procédé comprenant :
la fourniture d'un élément ressort flexible (200) avec un axe longitudinal (AX) et une paroi flexible (204) s'étendant de façon périphérique autour dudit axe longitudinal (AX) pour définir au moins partiellement une chambre de ressort (202) ;
la fourniture d'un premier élément d'extrémité (900) comportant une paroi d'élément d'extrémité (910) et un premier réservoir amortisseur (956) ayant un volume sensiblement fixe disposé au sein dudit premier élément d'extrémité (900) ; et
la fourniture d'un passage allongé d'amortissement à gaz (960) au moins partiellement au sein de ladite paroi d'élément d'extrémité (910) et s'étendant de façon périphérique autour dudit axe (AX) pour former au moins une partie d'au moins un serpentin hélicoïdal et raccordant ledit passage allongé d'amortissement à gaz (960) en communication fluidique entre ladite chambre de ressort (202) et ledit premier réservoir amortisseur (956) pour générer un amortissement par gaz sous pression des vibrations à travers une plage prédéterminée de fréquences avec un premier orifice de passage (968) du passage allongé d'amortissement à gaz (960) s'étendant à travers ladite paroi d'élément d'extrémité (910) et plaçant ledit passage allongé d'amortissement à gaz (960) en communication fluidique avec ladite chambre de ressort (202) et un second orifice de passage (970) dudit passage allongé d'amortissement à gaz (960) s'étendant à travers ladite paroi d'élément d'extrémité (910) et plaçant ledit passage allongé d'amortissement à gaz (960) en communication fluidique avec ledit premier réservoir amortisseur (956) ;
dans lequel la fourniture dudit premier élément d'extrémité (900) comporte la fourniture d'une première paroi d'élément d'extrémité (910) et d'une seconde paroi d'élément d'extrémité (928) qui coopère avec ladite première paroi d'élément d'extrémité (910) pour définir au moins partiellement ledit passage allongé d'amortissement à gaz (960) entre elles,
**caractérisé en ce que**
au moins l'une desdites première et seconde parois d'élément d'extrémité (910 ; 928) comporte une rainure hélicoïdale allongée (962 ; 964) s'étendant le long de celles-ci, qui définit au moins partiellement ledit passage allongé d'amortissement à gaz (960).

9. Procédé selon la revendication 8, dans lequel la fourniture de ladite première paroi d'élément d'extrémité (910) comporte la fourniture d'une surface externe (922) le long de ladite première paroi d'élément d'extrémité (910) avec une rainure (962) formée le long de ladite surface externe (922) définissant au moins partiellement ledit passage allongé d'amortissement à gaz (960).

10. Procédé selon la revendication 8 ou la revendication 9, dans lequel la fourniture de ladite seconde paroi d'élément d'extrémité (928) comporte la fourniture d'une surface interne (944) le long de ladite seconde paroi d'élément d'extrémité (928) avec une rainure (964) formée le long de ladite surface interne (944) définissant au moins partiellement ledit passage allongé d'amortissement à gaz (960).
